# EUROPEAN PATENT APPLICATION

(11) **EP 4 741 163 A1**
(43) Date of publication of application: **13.05.2026**
(21) Application number: 24859646.2
(22) Date of filing: 23.08.2024
(51) Int. Cl.: B32B 27/32, B65D 65/40

(54) **SEALANT FILM FOR LAMINATE, LAMINATE, AND PACKAGING CONTAINER**

(30) Priority: 29.08.2023 JP 2023139319
(71) Applicant: Dai Nippon Printing Co., Ltd., Tokyo 162-8001 (JP)
(72) Inventor: ISHIKAWA Shun, Tokyo 162-8001 (JP); KONO Shinichiro, Tokyo 162-8001 (JP); HASEGAWA Takayuki, Tokyo 162-8001 (JP); TAKUSHIMA Kazuhiro, Tokyo 162-8001 (JP)
(74) Representative: Müller-Boré & Partner Patentanwälte PartG mbB
(86) International application number: PCT/JP2024/030013
(87) International publication number: WO 2025/047613

(57) **Abstract**

As a sealant film for laminates that is superior in heat resistance, low-temperature sealability, and impact resistance, there is provided a sealant film for use in a laminate in which the percentage of polypropylene is 80% by mass or more. The sealant film includes at least a first layer positioned at one surface of the laminate and a second layer in contact with the first layer. The first layer contains a first matrix resin component constituting 51% by mass or more and 90% by mass or less and at least one first dispersed component, and has a sea-island structure in which the first dispersed component is dispersed in the first matrix resin component. The second layer contains a second matrix resin component constituting 51% by mass or more and 85% by mass or less and at least one second dispersed component, and has a sea-island structure in which the second dispersed component is dispersed in the second matrix resin component. The first matrix resin component is a propylene-ethylene random copolymer, and the first dispersed component includes 5% by mass or more polyethylene. The second matrix resin component is block polypropylene, and the second dispersed component includes 5% by mass or more polyethylene.

## Description

### Cross-Reference to Related Applications

The present application claims priority based on Patent Application No. 2023-139319, filed August 29, 2023, in Japan, the disclosure of which is hereby incorporated as part of the present description by reference in its entirety.

### Technical Field

The present disclosure relates to a sealant film for laminates, a laminate, and a packaging container.

### Background Art

In the related art, packaging containers have been composed of laminates in which a polyester film, superior in strength and heat resistance, or a nylon film, superior in impact resistance, for example, is used as a base material, and a polyolefin film, superior in heat sealability, is used as a sealant film. With the growing call for building a recycling-oriented society in recent years, however, there is a need for packaging containers having high recycling suitability. Nevertheless, known packaging containers, composed of different types of resin materials, are difficult to separate into the individual resin materials.

To address this, researchers have been studying monomaterialization with polypropylene (e.g., PTL 1) from the perspective of monomaterialization for easier recycling. In PTL 1, a laminate for use in packaging materials, for example for packaging containers, is disclosed in which a stretched base material containing polypropylene is used as a base material instead of a polyester film or nylon film and is combined with a sealant film containing polypropylene. With this laminate, recycling suitability has been improved by virtue of the base material and the sealant film being both composed of polypropylene.

### Citation List

### Patent Literature

PTL 1: Japanese Unexamined Patent Application Publication No. 2021-020391

### Summary of Invention

### Technical Problem

Meanwhile, when a laminate for use in packaging containers is made into a retort pouch or similar packaging container, the laminate is required to have heat resistance sufficient to withstand heat sterilization treatment. Since the laminate is made into the packaging container by heat sealing, furthermore, the laminate is required to have suitability for shaping into a bag, and the sealant film is required to have low-temperature sealability. Moreover, a laminate for use in a retort pouch or similar packaging container is required to have resistance to fall impact sufficient to withstand impact from a fall of the pouch (impact resistance). The reality, however, is that with laminates monomaterialized with polypropylene, the achievement of these characteristics requirements is not fully considered.

One of the problems to be solved by the present disclosure is to provide a sealant film for laminates that is superior in heat resistance, low-temperature sealability, and impact resistance and is suitable for laminates monomaterialized with polypropylene.

### Solution to Problem

A sealant film for a laminate according to the present disclosure is a sealant film for use in a laminate in which a percentage of polypropylene to a total amount of resin materials is 80% by mass or more, the sealant film including at least a first layer that, when the sealant film is used in the laminate, is positioned at one of two surfaces of the laminate and a second layer in contact with the first layer, wherein the first layer contains a first matrix resin component constituting 51% by mass or more and 90% by mass or less relative to a total amount of the first layer and at least one first dispersed component, and has a sea-island structure in which the first dispersed component is dispersed in the first matrix resin component, the second layer contains a second matrix resin component constituting 51% by mass or more and 85% by mass or less relative to a total amount of the second layer and at least one second dispersed component, and has a sea-island structure in which the second dispersed component is dispersed in the second matrix resin component, the first matrix resin component is a propylene-ethylene random copolymer, the first dispersed component includes at least one type of polyethylene constituting at least 5% by mass or more relative to the total amount of the first layer, the second matrix resin component is block polypropylene, and the second dispersed component includes at least one type of polyethylene constituting at least 5% by mass or more relative to the total amount of the second layer.

### Advantageous Effects of Invention

According to the present disclosure, a sealant film for laminates that is superior in heat resistance, low-temperature sealability, and impact resistance and is suitable for laminates monomaterialized with polypropylene can be provided.

### Brief Description of Drawings

[Fig. 1] Fig. 1 is a cross-sectional schematic view illustrating an embodiment of a sealant film for laminates.
[Fig. 2] Fig. 2 is a cross-sectional schematic view illustrating an embodiment of a sealant film for laminates.
[Fig. 3] Fig. 3 is a schematic cross-sectional view illustrating an embodiment of a laminate.
[Fig. 4] Fig. 4 is a schematic cross-sectional view illustrating an embodiment of a laminate.
[Fig. 5] Fig. 5 is a schematic cross-sectional view illustrating an embodiment of a laminate.
[Fig. 6] Fig. 6 is a schematic cross-sectional view illustrating an embodiment of a laminate.
[Fig. 7] Fig. 7 is a schematic cross-sectional view illustrating an embodiment of a laminate.
[Fig. 8] Fig. 8 is a schematic cross-sectional view illustrating an embodiment of a laminate.
[Fig. 9] Fig. 9 is a schematic cross-sectional view illustrating an embodiment of a laminate.
[Fig. 10] Fig. 10 is a schematic cross-sectional view illustrating an embodiment of a laminate.
[Fig. 11] Fig. 11 is a schematic cross-sectional view illustrating an embodiment of a laminate.
[Fig. 12] Fig. 12 is a schematic cross-sectional view illustrating an embodiment of a laminate.
[Fig. 13] Fig. 13 is a schematic cross-sectional view illustrating an embodiment of a laminate.
[Fig. 14] Fig. 14 is a schematic cross-sectional view illustrating an embodiment of a laminate.
[Fig. 15] Fig. 15 is a schematic cross-sectional view illustrating an embodiment of a laminate.
[Fig. 16] Fig. 16 is a schematic cross-sectional view illustrating an embodiment of a laminate.
[Fig. 17] Fig. 17 is a schematic cross-sectional view illustrating an embodiment of a laminate.
[Fig. 18] Fig. 18 is a schematic cross-sectional view illustrating an embodiment of a laminate.
[Fig. 19] Fig. 19 is a schematic cross-sectional view illustrating an embodiment of a laminate.
[Fig. 20] Fig. 20 is a schematic cross-sectional view illustrating an embodiment of a laminate.
[Fig. 21] Fig. 21 is a front view illustrating an embodiment of a packaging container.
[Fig. 22] Fig. 22 is a perspective view illustrating an embodiment of a packaging container.

### Description of Embodiments

Embodiments of the present disclosure will now be described in detail. The present disclosure can be implemented in numerous different forms and is not to be construed as limited to the descriptions in the embodiments illustrated below. The drawings may be presented schematically, for example in terms of the width, thickness, and shape of layers, compared to the embodiments to make the descriptions clearer, but they are merely examples and do not limit the interpretation of the present disclosure. In the present description and drawings, elements similar to those already described in relation to a previously mentioned drawing may be assigned the same reference signs, and their detailed descriptions may be omitted as appropriate.

When multiple candidate upper limits and multiple candidate lower limits are listed for a certain parameter in the present disclosure, the numerical range of that parameter may be constituted by pairing any one candidate upper limit with any one candidate lower limit. Examples of such parameters include physical characteristics, percentages of components, and thicknesses of layers. As an example, the following statement is described: "Parameter B is preferably A1 or more, more preferably A2 or more, even more preferably A3 or more. Parameter B is preferably A4 or less, more preferably A5 or less, even more preferably A6 or less." In this example, the numerical range of parameter B may be from A1 to A4, both inclusive, may be from A1 to A5, both inclusive, may be from A1 to A6, both inclusive, may be from A2 to A4, both inclusive, may be from A2 to A5, both inclusive, may be from A2 to A6, both inclusive, may be from A3 to A4, both inclusive, may be from A3 to A5, both inclusive, or may be from A3 to A6, both inclusive.

In each category of components that appear in the following description (e.g., polypropylene, α-olefins, resin materials, additives, adhesive resins, inorganic oxides, gas barrier resins, propylene-ethylene block copolymers, thermoplastic elastomers, and polyethylene), one component in that category may be used, or two or more may be used.

### [Sealant Film for Laminates]

A sealant film according to the present disclosure for laminates includes a first layer and a second layer.

The sealant film for laminates may further include, in an embodiment, a third layer. The sealant film according to the present disclosure for laminates is a multilayer film, including at least two or more layers.

The sealant film according to the present disclosure for laminates is suitable for use in laminates in which the percentage of polypropylene relative to the total amount of resin materials is 80% by mass or more.

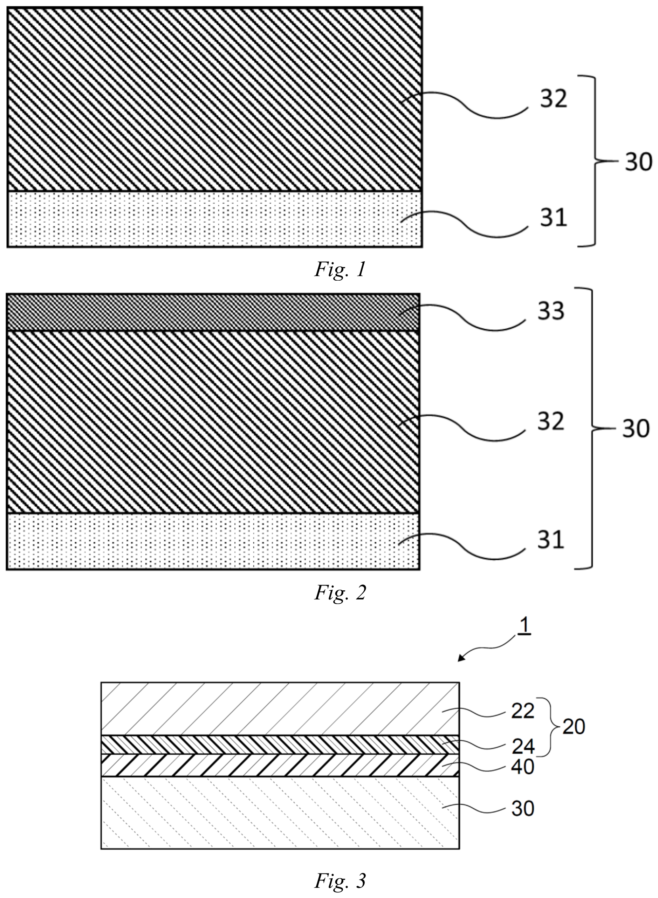

Fig. 1 and Fig. 2 are schematic cross-sectional views each illustrating an embodiment of a sealant film for laminates.

The sealant film 30 for laminates illustrated in Fig. 1 is in a two-layer configuration and includes a first layer 31 as a seal layer and a second layer 32 as a core layer in this order in the thickness direction. In this example, when the sealant film 30 for laminates is used in a laminate, the first layer 31 is positioned outermost in the laminate, and the second layer 32 is positioned further inside in the laminate.

The sealant film 30 for laminates illustrated in Fig. 2 is in a three-layer configuration and includes a first layer 31 as a seal layer, a second layer 32 as a core layer, and a third layer 33 as a surface layer in this order in the thickness direction. In this example, when the sealant film 30 for laminates is used in a laminate, the first layer 31 is positioned outermost in the laminate and constitutes one of the two surfaces of the laminate, and the third layer 33 is positioned further inside in the laminate.

### (First Layer)

The first layer contains a first matrix resin component and at least one first dispersed component. In an embodiment, the first layer has what is called a sea-island structure, in which an island component is dispersed in a sea component, with the first matrix resin component being the sea component, and the first dispersed component being the island component.

The first layer constitutes a seal layer of the sealant film according to the present disclosure for laminates.

The first matrix resin component is a propylene-ethylene random copolymer.

The propylene-ethylene random copolymer (propylene random copolymer) is a random copolymer composed of propylene units constituting 51% by mass or more and 90% by mass or less as a main component and ethylene units as a comonomer. In comparison with propylene homopolymers (homopolypropylene), the copolymer is superior in transparency and impact strength and has a melting point lower by 20°C to 30°C.

The ethylene content of the propylene-ethylene random copolymer is preferably 1.0% by mass or more, more preferably 2.0% by mass or more. The ethylene content of the propylene-ethylene random copolymer is preferably 20% by mass or less, more preferably 10% by mass or less. When the ethylene content is equal to or higher than the lower limits, low-temperature sealability can be guaranteed when a laminate is formed using the sealant film according to the present disclosure for laminates. When the ethylene content is equal to or lower than the upper limits, an excessive decrease in heat resistance can be reduced when a laminate is formed using the sealant film according to the present disclosure for laminates.

The ethylene content of the propylene-ethylene random copolymer can be measured by the method for determining ethylene content (the IR method) described on pages 412 and 413 of the handbook for polymer analysis (May 10, 2013; third printing) edited by the Research Committee for Polymer Analysis of the Japan Society for Analytical Chemistry.

The melting point of the propylene-ethylene random copolymer is preferably 145°C or less, more preferably 135°C or less. When the melting point is equal to or lower than the upper limits, the low-temperature sealability of a laminate made using the sealant film according to the present disclosure for laminates is good. The suitability for shaping into a bag of the laminate, therefore, can be improved. The lower limit to the melting point of the propylene-ethylene random copolymer is preferably 120 or more. When the melting point is equal to or higher than the lower limit, heat-seal strength can be guaranteed under temperature conditions for "semi-retort" treatment (retort treatment at lower temperatures) when a laminate made using the sealant film according to the present disclosure for laminates is used in, for example, a retort pouch.

Herein, the melting point can be measured according to JIS K7121: 2012 (Testing Methods for Transition Temperatures of Plastics). Specifically, a DSC curve is measured at a temperature elevation rate of 10°C/minute by differential scanning calorimetry (DSC), from which the melting point can be determined.

The melt flow rate (MFR) of the propylene-ethylene random copolymer is preferably 0.5 g/10 minutes or more and 10 g/10 minutes or less, more preferably 1 g/10 minutes or more and 5 g/10 minutes or less. The MFR of the propylene-ethylene random copolymer is measured under the conditions of a temperature of 230°C and a load of 2.16 kg according to JIS K7210.

Examples of methods for producing the propylene-ethylene random copolymer include the method of polymerizing monomers such as the raw-material propylene and ethylene using a catalyst. Examples of catalysts include Ziegler-Natta catalysts and metallocene catalysts.

The first dispersed component includes at least one type of polyethylene. Polyethylene can contribute to increasing the impact resistance of the sealant film according to the present disclosure for laminates. The first layer has a sea-island structure in which polyethylene that is a first dispersed component (island component) is dispersed in a propylene-ethylene random copolymer that is the first matrix resin component (sea component). With such a first layer, therefore, the resistance to fall impact of a laminate made using the sealant film according to the present disclosure for laminates can be increased.

Examples of polyethylene include high-density polyethylene (HDPE), medium-density polyethylene (MDPE), low-density polyethylene (LDPE), and linear low-density polyethylene (LLDPE). Of these, low-density polyethylene and linear low-density polyethylene are particularly preferred, with linear low-density polyethylene being more preferred. Linear low-density polyethylene exhibits good dispersibility in the aforementioned propylene-ethylene random copolymer that is the sea component. With this type of polyethylene, therefore, the impact resistance of the first layer can be increased. By virtue of this, delamination caused by discontinuity of impact resistance can be reduced at the interface between the first layer and the second layer of the sealant film for laminates.

The density of low-density polyethylene is preferably 900 kg/m³ or more and 925 kg/m³ or less, more preferably 910 kg/m³ or more and 925 kg/m³ or less. The density is measured according to JIS K7112, method D (density gradient column method, 23°C) in particular. Low-density polyethylene is obtained by, for example, polymerizing ethylene at a high pressure of 1000 atm or more and less than 2000 atm. Low-density polyethylene is also referred to as high-pressure low-density polyethylene.

The density of linear low-density polyethylene is preferably 900 kg/m³ or more and 925 kg/m³ or less, more preferably 915 kg/m³ or more and 925 kg/m³ or less. Linear low-density polyethylene is obtained by, for example, copolymerizing ethylene and an α-olefin at a medium pressure or low pressure to introduce short-chain branches derived from the α-olefin. Examples of α-olefins include α-olefins containing four or more and ten or fewer carbons, such as 1-butene, 1-hexene, 4-methyl-1-pentene, and 1-octene.

The polyethylene may be biomass-derived polyethylene or mechanically recycled or chemically recycled polyethylene for reduced environmental impact.

The melting point (Tm) of the polyethylene may be 100°C or more and 120°C or less or may be 105°C or more and 120°C or less. The Tm of the polyethylene is obtained by differential scanning calorimetry (DSC) according to JIS K7121.

The MFR of the polyethylene may be 1 g/10 minutes or more and 20 g/10 minutes or less or may be 2 g/10 minutes or more and 10 g/10 minutes or less. The MFR of the polyethylene is measured under the conditions of a temperature of 190°C and a load of 2.16 kg according to JIS K7210.

The first dispersed component may further include a first elastomer. By including a first elastomer in the first dispersed component, the state of dispersion of the polyethylene that is a first dispersed component (island component) within the propylene-ethylene random copolymer that is the first matrix resin component (sea component) can be further improved. Through this, the resistance to fall impact of a laminate made using the sealant film according to the present disclosure for laminates can be further increased.

The first elastomer is not particularly limited as long as it is a thermoplastic elastomer with which the state of dispersion of the polyethylene within the propylene-ethylene random copolymer can be improved. Examples of first elastomers include a propylene-ethylene copolymer (propylene-ethylene elastomer) and an ethylene-α-olefin copolymer (ethylene-α-olefin elastomer).

The propylene-ethylene elastomer is a low-crystallinity or amorphous copolymeric elastomer and is a random copolymer composed of propylene units constituting 50% by mass or more and 90% by mass or less as a main component and ethylene units as a comonomer. The propylene-ethylene elastomer is preferably an elastomer produced using a metallocene catalyst.

The ethylene-α-olefin elastomer is a low-crystallinity or amorphous copolymeric elastomer and is a random copolymer composed of ethylene units constituting 50% by mass or more and 90% by mass or less as a main component and α-olefin units as a comonomer. The ethylene-α-olefin elastomer is preferably an elastomer produced using a metallocene catalyst.

Examples of α-olefins include α-olefins containing three or more and ten or fewer carbons. Specific examples include propylene, 1-butene, 1-hexene, and 1-octene. Examples of ethylene-α-olefin elastomers include an ethylene-propylene random copolymer, an ethylene-1-butene random copolymer, and an ethylene-1-octene random copolymer.

The MFR of the first elastomer is preferably 0.1 g/10 minutes or more and 10 g/10 minutes or less, more preferably 0.2 g/10 minutes or more and 5 g/10 minutes or less. The MFR of the first elastomer is measured under the conditions of a temperature of 230°C or 190°C and a load of 2.16 kg according to JIS K7210.

In the first layer, the percentage of the first matrix resin component is 51% by mass or more, preferably 70% by mass or more, more preferably 75% by mass or more, even more preferably 85% by mass or more, relative to the total amount of the first layer. In the first layer, the percentage of the first matrix resin component is 90% by mass or less relative to the total amount of the first layer.

In the first layer, the percentage of the first dispersed component is preferably 10% by mass or more, more preferably 15% by mass or more, relative to the total amount of the first layer. In the first layer, the percentage of the first dispersed component is preferably 49% by mass or less, more preferably 30% by mass or less, relative to the total amount of the first layer. When the percentage of the first dispersed component is equal to or higher than the lower limits in the first layer, the impact resistance of a laminate made using the sealant film according to the present disclosure for laminates, for example, can be further improved. When the percentage of the first dispersed component is equal to or lower than the upper limits, the low-temperature sealability of a laminate made using the sealant film according to the present disclosure for laminates, for example, can be further improved.

In the first layer, the percentage of polyethylene is 5% by mass or more, preferably 8% by mass or more, more preferably 13% by mass or more, relative to the total amount of the first layer. In the first layer, the percentage of polyethylene is, for example, 15% by mass or less relative to the total amount of the first layer. When the percentage of polyethylene is equal to or higher than the lower limits, the impact resistance of a laminate made using the sealant film according to the present disclosure for laminates, for example, can be further improved. When the percentage of polyethylene is equal to or lower than the upper limit, the low-temperature sealability of a laminate made using the sealant film according to the present disclosure for laminates, for example, can be further improved.

In the first layer, the percentage of the first elastomer is preferably 4% by mass or more, more preferably 7% by mass or more, relative to the total amount of the first layer. In the first layer, the percentage of the first elastomer is, for example, 12% by mass or less relative to the total amount of the first layer. When the percentage of the first elastomer is equal to or higher than the lower limits, the impact resistance of a laminate made using the sealant film according to the present disclosure for laminates, for example, can be further improved. When the percentage of the first elastomer is equal to or lower than the upper limit, the low-temperature sealability of a laminate made using the sealant film according to the present disclosure for laminates, for example, can be further improved.

In the first dispersed component, the ratio of the amount of the first elastomer to the amount of polyethylene is preferably 0.5 or more and less than 1.0. When the ratio of the amount of the first elastomer to the amount of polyethylene falls within this range in the first dispersed component, the impact resistance of a laminate made using the sealant film according to the present disclosure for laminates, for example, can be further improved.

The thickness of the first layer is preferably 5 µm or more, more preferably 10 µm or more, even more preferably 12 µm or more. The thickness of the first layer is preferably 20 µm or less, more preferably 15 µm or less. When the thickness is equal to or more than the lower limits, the low-temperature sealability and impact resistance of a packaging container including a laminate made using the sealant film according to the present disclosure for laminates, for example, can be further improved. When the thickness is equal to or less than the upper limits, the workability of a laminate made using the sealant film according to the present disclosure for laminates, for example, can be further improved.

### (Second Layer)

The second layer contains a second matrix resin component and at least one second dispersed component. In an embodiment, the second layer has what is called a sea-island structure, in which an island component is dispersed in a sea component, with the second matrix resin component being the sea component, and the second dispersed component being the island component.

The second layer constitutes a core layer of the sealant film according to the present disclosure for laminates.

The second matrix resin component is block polypropylene (block PP).

Block polypropylene (a propylene block copolymer) is a copolymer containing at least a propylene homopolymer (homopolypropylene) and a block elastomer. Examples of block polypropylene include a propylene-ethylene block copolymer.

The propylene-ethylene block copolymer includes, in an embodiment, a polymer portion formed of a propylene polymer (a) and a polymer portion formed of polyethylene and an ethylene-propylene copolymeric rubber component (b). The propylene-ethylene block copolymer includes, in an embodiment, a sea component formed of a propylene polymer and an island component formed of polyethylene and an ethylene-propylene copolymeric rubber component. Polymer portion (a) and the sea component can contribute to increasing the heat resistance, rigidity, anti-blocking properties, and seal strength of the propylene-ethylene block copolymer. Polymer portion (b) and the island component can contribute to increasing the impact resistance of the propylene-ethylene block copolymer. By adjusting the proportions of polymer portion (a) and polymer portion (b) or the proportions of the sea component and the island component, therefore, the mechanical properties of the second layer containing the propylene-ethylene block copolymer can be adjusted.

The propylene polymer in polymer portion (a) is, in an embodiment, a propylene homopolymer having a melting point of 160°C or more. This propylene polymer may be a copolymer of propylene and a small amount (e.g., 5 mol% or less) of α-olefin as long as its melting point is 160°C or more. Examples of α-olefins include ethylene, 1-butene, 1-hexene, and 1-octene.

In polymer portion (b), the percentage of constituent units derived from ethylene is preferably 10% by mass or more, more preferably 20% by mass or more, for example in the polyethylene and the ethylene-propylene copolymeric rubber component. This percentage, furthermore, is preferably 50% by mass or less, more preferably 40% by mass or less. By ensuring that the percentage falls within these preferred ranges, resistance to fall impact, for example, can be further improved. In the present disclosure, the percentage of constituent units can be measured by, for example, thermal gradient interaction chromatography (TGIC). It should be noted that in polymer portion (b), the ethylene-propylene copolymeric rubber component corresponds to the block elastomer.

In the propylene-ethylene block copolymer, the proportion by mass of polymer portion (a) or the sea component, formed of a propylene polymer, is preferably higher than the proportion by mass of polymer portion (b) or the island component, formed of polyethylene and an ethylene-propylene copolymeric rubber component.

In the propylene-ethylene block copolymer, the proportion by mass of polymer portion (a) or the sea component, formed of a propylene polymer, is preferably 51% by mass or more, more preferably 60% by mass or more, even more preferably 70% by mass or more. The upper limit to the proportion by mass of polymer portion (a) or the sea component, formed of a propylene polymer, is, for example, 90% by mass.

In the propylene-ethylene block copolymer, the proportion by mass of polymer portion (b) or the island component, formed of polyethylene and an ethylene-propylene copolymeric rubber component, is preferably 49% by mass or less, more preferably 40% by mass or less, even more preferably 30% by mass or less. The lower limit to the proportion by mass of polymer portion (b) or the island component, formed of polyethylene and an ethylene-propylene copolymeric rubber component, is, for example, 10% by mass.

The melt flow rate (MFR) of the propylene-ethylene block copolymer is preferably 0.5 g/10 minutes or more and 10 g/10 minutes or less, more preferably 1 g/10 minutes or more and 5 g/10 minutes or less. The MFR of the propylene-ethylene block copolymer is measured under the conditions of a temperature of 230°C and a load of 2.16 kg according to JIS K7210.

Examples of methods for producing the propylene-ethylene block copolymer include the method of polymerizing monomers such as the raw-material propylene and ethylene using a catalyst. Examples of catalysts include Ziegler-Natta catalysts and metallocene catalysts.

The second dispersed component includes at least one type of polyethylene. Polyethylene can contribute to increasing the impact resistance of the sealant film according to the present disclosure for laminates. The second layer has a sea-island structure in which polyethylene is dispersed as a second dispersed component in block polypropylene (a propylene-ethylene block copolymer) that is the second matrix resin component. That is, the second layer has a sea-island structure in which a polymer portion formed of an ethylene-propylene copolymeric rubber component (b) and polyethylene that is a second dispersed component are dispersed in a polymer portion composed of a propylene polymer (a). With such a second layer, therefore, the resistance to fall impact of a laminate made using the sealant film according to the present disclosure for laminates can be further increased.

Types of polyethylene that can be used are the same as the types of polyethylene for the first dispersed component in the first layer.

The second dispersed component may further include a second elastomer. By including a second elastomer in the second dispersed component, the state of dispersion of the polyethylene that is a second dispersed component (island component) within the propylene-ethylene block copolymer that is the second matrix resin component (sea component) can be further improved. Through this, the resistance to fall impact of a laminate made using the sealant film according to the present disclosure for laminates can be further increased.

Elastomers that can be used as second elastomers are the same thermoplastic elastomers as for the first dispersed component in the first layer.

In the second layer, the percentage of the second matrix resin component is 51% by mass or more, preferably 70% by mass or more, more preferably 75% by mass or more, relative to the total amount of the second layer. In the second layer, the percentage of the second matrix resin component is 85% by mass or less relative to the total amount of the second layer.

In the second layer, the percentage of the second dispersed component is preferably 15% by mass or more, more preferably 20% by mass or more, relative to the total amount of the second layer. In the second layer, the percentage of the second dispersed component is preferably 49% by mass or less, more preferably 45% by mass or less, relative to the total amount of the second layer. When the percentage of the second dispersed component is equal to or higher than the lower limits in the second layer, the impact resistance of a laminate made using the sealant film according to the present disclosure for laminates, for example, can be further improved. When the percentage of the second dispersed component is equal to or lower than the upper limits, the heat resistance of a laminate made using the sealant film according to the present disclosure for laminates, for example, can be further improved.

In the second layer, the percentage of polyethylene is 5% by mass or more, preferably 15% by mass or more, more preferably 20% by mass or more, relative to the total amount of the second layer. In the second layer, the percentage of polyethylene is, for example, 30% by mass or less relative to the total amount of the second layer. When the percentage of polyethylene is equal to or higher than the lower limits, the impact resistance of a laminate made using the sealant film according to the present disclosure for laminates, for example, can be further improved. When the percentage of polyethylene is equal to or lower than the upper limit, the heat resistance of a laminate made using the sealant film according to the present disclosure for laminates, for example, can be further improved.

In the second layer, the percentage of the second elastomer is preferably 2% by mass or more, more preferably 5% by mass or more, even more preferably 10% by mass or more, relative to the total amount of the second layer. In the second layer, the percentage of the second elastomer is, for example, 20% by mass or less relative to the total amount of the second layer. When the percentage of the second elastomer is equal to or higher than the lower limits, the impact resistance of a laminate made using the sealant film according to the present disclosure for laminates, for example, can be further improved. When the percentage of the second elastomer is equal to or lower than the upper limit, the heat resistance of a laminate made using the sealant film according to the present disclosure for laminates, for example, can be further improved.

In the second dispersed component, the ratio of the amount of the second elastomer to the amount of polyethylene is preferably 0.5 or more and less than 1.0. When the ratio of the amount of the second elastomer to the amount of polyethylene falls within this range in the second dispersed component, the impact resistance of a laminate made using the sealant film according to the present disclosure for laminates, for example, can be further improved.

The thickness of the second layer is preferably 30 µm or more, more preferably 40 µm or more, even more preferably 50 µm or more. The thickness of the second layer is preferably 100 µm or less, more preferably 80 µm or less, even more preferably 60 µm or less. When the thickness is equal to or more than the lower limits, the heat resistance and impact resistance of a packaging container including a laminate made using the sealant film according to the present disclosure for laminates, for example, can be further improved. When the thickness is equal to or less than the upper limits, the workability of a laminate made using the sealant film according to the present disclosure for laminates, for example, can be further improved.

### (Third Layer)

The third layer contains a third matrix resin component and at least one third dispersed component. In an embodiment, the third layer has what is called a sea-island structure, in which an island component is dispersed in a sea component, with the third matrix resin component being the sea component, and the third dispersed component being the island component.

The third layer constitutes a surface layer of the sealant film according to the present disclosure for laminates.

The third matrix resin component is block polypropylene (block PP).

Types of block polypropylene that can be used are the same as for the second matrix resin component in the second layer.

The third dispersed component includes at least one type of polyethylene. Polyethylene can contribute to increasing the impact resistance of the sealant film according to the present disclosure for laminates. The third layer has a sea-island structure in which polyethylene that is a third dispersed component (island component) is dispersed in block polypropylene that is the third matrix resin component (sea component). With such a third layer, therefore, the resistance to fall impact of a laminate made using the sealant film according to the present disclosure for laminates can be increased.

Types of polyethylene that can be used are the same as in the first layer and the second layer.

The third dispersed component may further include a third elastomer. By including a third elastomer in the third dispersed component, the state of dispersion of the polyethylene that is a third dispersed component (island component) within the propylene-ethylene block copolymer that is the third matrix resin component (sea component) can be further improved. Through this, the resistance to fall impact of a laminate made using the sealant film according to the present disclosure for laminates can be further increased.

Elastomers that can be used as third elastomers are the same thermoplastic elastomers as in the first layer and the second layer.

In the third layer, possible percentages of the third matrix resin component and possible percentages of the third dispersed component are the same as in the second layer.

In the third layer, possible percentages of polyethylene and possible percentages of the third elastomer are the same as in the second layer.

The thickness of the third layer is preferably 5 µm or more, more preferably 10 µm or more, even more preferably 12 µm or more. The thickness of the third layer is preferably 20 µm or less, more preferably 15 µm or less. When the thickness is equal to or more than the lower limits, the heat resistance and impact resistance of a packaging container including a laminate made using the sealant film according to the present disclosure for laminates, for example, can be further improved. When the thickness is equal to or less than the upper limits, the workability of a laminate made using the sealant film according to the present disclosure for laminates, for example, can be further improved.

### (Sealant Film)

In the sealant film according to the present disclosure for laminates, the polyethylene used in the first layer, that in the second layer, and that in the third layer may all be the same type(s) of polyethylene or may be types of polyethylene different from each other. Likewise, in the sealant film, the first to third elastomers used in the first layer, the second layer, and the third layer may all be the same type of thermoplastic elastomer or may be types of thermoplastic elastomers different from each other.

The sealant film according to the present disclosure for laminates preferably has a smaller percentage of the first dispersed component relative to the total amount of the first layer, which is a seal layer, than the percentage of the second dispersed component relative to the total amount of the second layer, which is a core layer. With a sealant film for laminates that satisfies this relationship, the occurrence of a fracture at the interface between the first layer and the second layer can be reduced by increasing compatibility between the two layers by maintaining continuity of impact resistance between the two layers, and low-temperature sealability attributed to the first layer can be further improved at the same time.

The sealant film according to the present disclosure for laminates preferably has a ratio of the thickness of the second layer to the thickness of the first layer of 3.0 or more. With a sealant film for laminates that satisfies this relationship, with a sealant film for laminates that satisfies this relationship, heat resistance and impact resistance attributed to the second layer can be further improved.

In the sealant film according to the present disclosure for laminates, the percentage of polyethylene and the first to third elastomers (thermoplastic elastomers) to the total amount of the sealant film is preferably 15% by mass or more, more preferably 20% by mass or more. This percentage is preferably 40% by mass or less, more preferably 30% by mass or less. When the percentage falls within these ranges, the impact resistance of a laminate made using the sealant film according to the present disclosure for laminates, for example, can be further improved.

The thickness of the sealant film according to the present disclosure for laminates is preferably 30 µm or more, more preferably 40 µm or more, even more preferably 50 µm or more. The thickness of the sealant film for laminates, furthermore, is preferably 200 µm or less, more preferably 100 µm or less, even more preferably 80 µm or less. When the thickness is equal to or more than the lower limits, the time required to heat-seal a packaging container including the laminate, for example, can be shortened. When the thickness is equal to or less than the upper limits, the working suitability of the laminate, for example, can be further improved. When a pouch (a retort pouch in particular) is produced from the laminate, the thickness of the sealant layer is preferably 30 µm or more and 200 µm or less, more preferably 40 µm or more and 100 µm or less, even more preferably 50 µm or more and 80 µm or less.

The sealant film according to the present disclosure for laminates can be manufactured by, for example, a method known in the related art. The sealant film can be obtained by mixing the materials described above by an ordinary method and shaping the resulting mixture into a film by an ordinary method. The sealant film is preferably a film obtained through extrusion molding. The extrusion molding is preferably performed by the T-die method or inflation. Specifically, the materials constituting the sealant film are dried as necessary and then fed into a hot-melt extruder heated to a temperature equal to or higher than the melting points of the materials to cause the materials to melt. The molten materials are extruded to form a film through a die, such as a T-die, and the extruded film-shaped material is rapidly solidified, for example using a rotating cooling drum. In this manner, a sealant film can be shaped.

The hot-melt extruder can be a single-screw extruder, a twin-screw extruder, a vented extruder, a tandem extruder, or another type of extruder according to the purpose. The temperature of the molten polymer during extrusion from the hot-melt extruder may be, for example, 200°C or more and 300°C or less or may be 220°C or more and 270°C or less.

The sealant film according to the present disclosure for laminates is preferably an unstretched resin film for heat sealability reasons. This type of resin film can be produced through the use of, for example, casting, the T-die method, or inflation.

### [Laminate]

A laminate according to the present disclosure includes a base material (first base material) and a sealant layer.

The base material includes a polypropylene resin layer that has undergone stretching treatment.

The base material is, in an embodiment, a barrier base material including a polypropylene resin layer that has undergone stretching treatment and a vapor deposition film. The barrier base material may further include the layers described later.

The base material, in an embodiment, consists of a polypropylene resin layer that has undergone stretching treatment. That is, the base material is, in an embodiment, a polypropylene resin base material that has undergone stretching treatment.

"Polypropylene resin layer" and "polypropylene resin base material" in the following description represent "a polypropylene resin layer that has undergone stretching treatment" and "a polypropylene resin base material that has undergone stretching treatment," respectively, except when stretching treatment is described.

The laminate according to the present disclosure is suitable for packaging material applications.

The laminate according to the present disclosure may include two or more base materials.

The laminate according to the present disclosure preferably further includes a second base material between the first base material and the sealant layer, thereby including a first base material, a second base material, and a sealant layer in this order in the thickness direction. Each of the first base material and the second base material is independently a barrier base material or a polypropylene resin base material.

In an embodiment, any one of the first base material or the second base material is a barrier base material, and the other of the first base material or the second base material is a polypropylene resin base material. In another embodiment, both the first base material and the second base material may be barrier base materials, or both the first base material and the second base material may be polypropylene resin base materials.

Fig. 3 to Fig. 20 are schematic cross-sectional views each illustrating an embodiment of a laminate.

The laminate 1 illustrated in Fig. 3 includes a barrier base material 20 as a base material, a bonding layer 40, and a sealant layer 30 in this order in the thickness direction. The barrier base material 20 includes a polypropylene resin layer 22 and a vapor deposition film 24. In this example, the barrier base material 20 is positioned such that the polypropylene resin layer 22 constitutes the outermost layer of the laminate 1, and that the vapor deposition film 24 faces the bonding layer 40 side. In this configuration, the vapor deposition film 24 and the bonding layer 40 may be in contact.

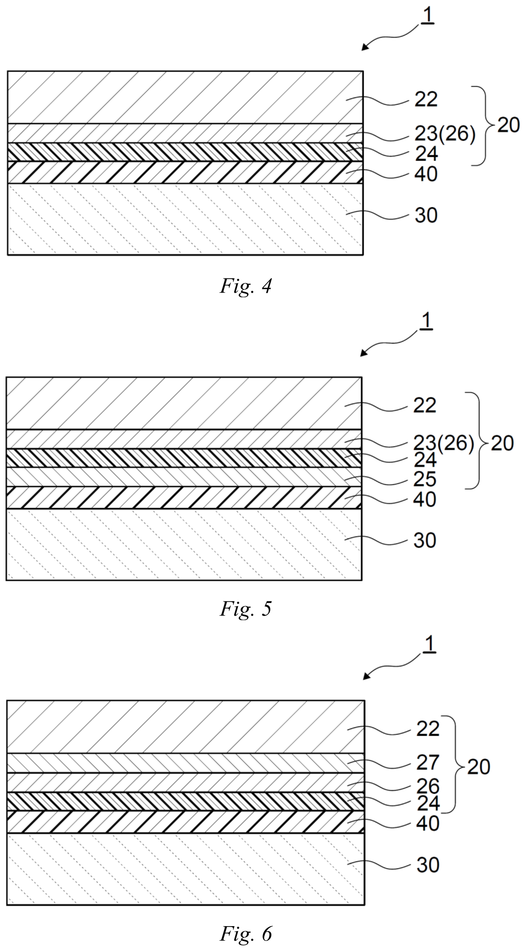

Fig. 4 is similar to Fig. 3, except that the barrier base material 20 includes a surface coating layer 23 or a surface resin layer 26 between the polypropylene resin layer 22 and the vapor deposition film 24.

Fig. 5 is similar to Fig. 3, except that the barrier base material 20 includes a polypropylene resin layer 22, a surface coating layer 23 or a surface resin layer 26, a vapor deposition film 24, and a barrier coating layer 25 in this order in the thickness direction. In this example, the barrier base material 20 is positioned such that the barrier coating layer 25 faces the bonding layer 40 side. The barrier coating layer 25 and the bonding layer 40 may be in contact.

Fig. 6 is similar to Fig. 4, except that the barrier base material 20 includes an adhesive resin layer 27 between the polypropylene resin layer 22 and the surface resin layer 26.

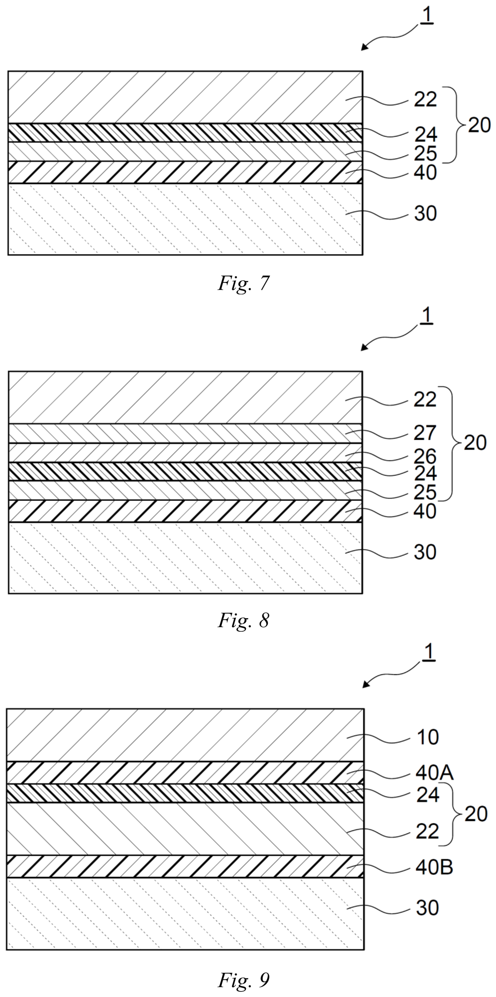

Fig. 7 is similar to Fig. 5, except that the barrier base material 20 includes a polypropylene resin layer 22, a vapor deposition film 24, and a barrier coating layer 25 in this order in the thickness direction.

Fig. 8 is similar to Fig. 5, except that the barrier base material 20 includes an adhesive resin layer 27 between the polypropylene resin layer 22 and the surface resin layer 26.

The laminate 1 illustrated in Fig. 9 includes a polypropylene resin base material 10 as a first base material, a bonding layer 40A, a barrier base material 20 as a second base material, a bonding layer 40B, and a sealant layer 30 in this order in the thickness direction. The barrier base material 20 includes a polypropylene resin layer 22 and a vapor deposition film 24. In this example, the barrier base material 20 is positioned such that the polypropylene resin layer 22 is in contact with the bonding layer 40B, and that the vapor deposition film 24 faces the bonding layer 40A side. The vapor deposition film 24 and the bonding layer 40A may be in contact.

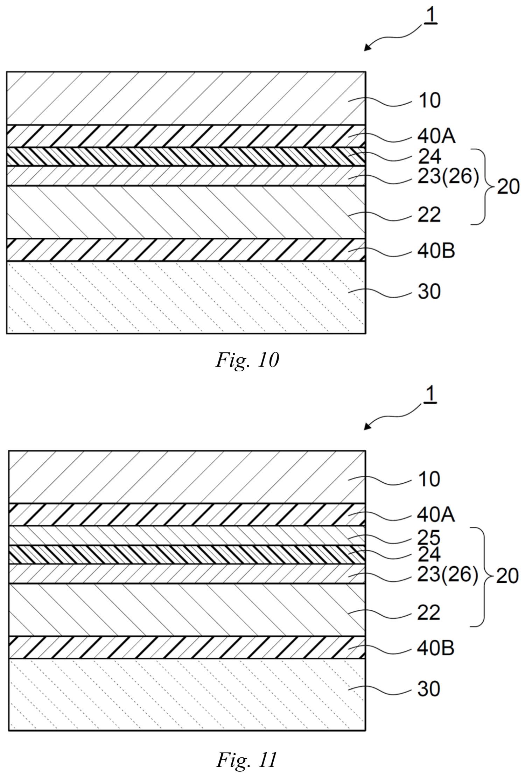

Fig. 10 is similar to Fig. 9, except that the barrier base material 20 includes a surface coating layer 23 or a surface resin layer 26 between the polypropylene resin layer 22 and the vapor deposition film 24.

Fig. 11 is similar to Fig. 9, except that the barrier base material 20 includes a polypropylene resin layer 22, a surface coating layer 23 or a surface resin layer 26, a vapor deposition film 24, and a barrier coating layer 25 in this order in the thickness direction. In this example, the barrier base material 20 is positioned such that the barrier coating layer 25 faces the bonding layer 40A side. The barrier coating layer 25 and the bonding layer 40A may be in contact.

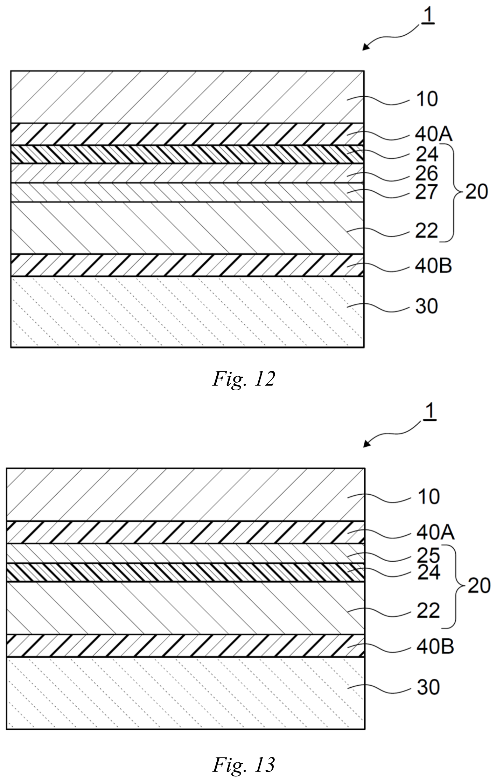

Fig. 12 is similar to Fig. 10, except that the barrier base material 20 includes an adhesive resin layer 27 between the polypropylene resin layer 22 and the surface resin layer 26.

Fig. 13 is similar to Fig. 10, except that the barrier base material 20 includes a polypropylene resin layer 22, a vapor deposition film 24, and a barrier coating layer 25 in this order in the thickness direction.

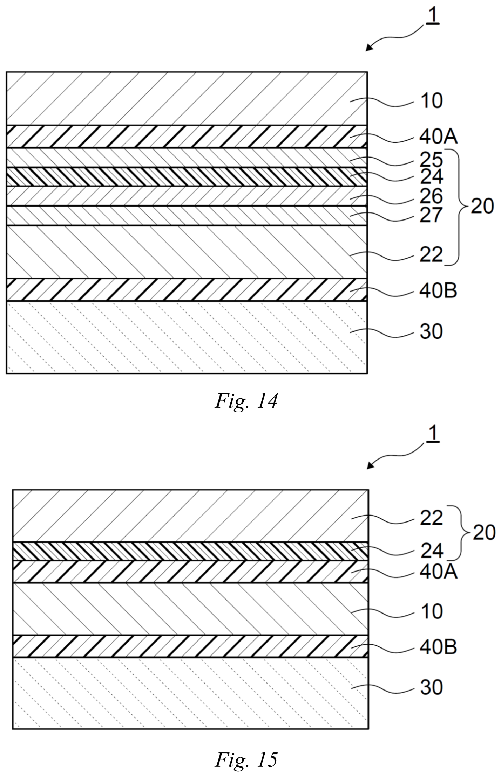

Fig. 14 is similar to Fig. 11, except that the barrier base material 20 includes an adhesive resin layer 27 between the polypropylene resin layer 22 and the surface resin layer 26.

The laminate 1 illustrated in Fig. 15 includes a barrier base material 20 as a first base material, a bonding layer 40A, a polypropylene resin base material 10 as a second base material, a bonding layer 40B, and a sealant layer 30 in this order in the thickness direction. The barrier base material 20 includes a polypropylene resin layer 22 and a vapor deposition film 24. In this example, the barrier base material 20 is positioned such that the polypropylene resin layer 22 constitutes the outermost layer of the laminate 1, and that the vapor deposition film 24 faces the bonding layer 40A side. The vapor deposition film 24 and the bonding layer 40A may be in contact.

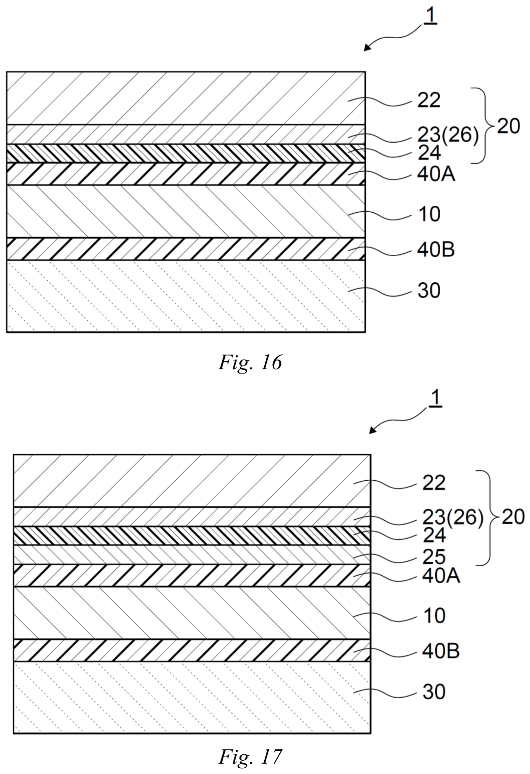

Fig. 16 is similar to Fig. 15, except that the barrier base material 20 includes a surface coating layer 23 or a surface resin layer 26 between the polypropylene resin layer 22 and the vapor deposition film 24.

Fig. 17 is similar to Fig. 15, except that the barrier base material 20 includes a polypropylene resin layer 22, a surface coating layer 23 or a surface resin layer 26, a vapor deposition film 24, and a barrier coating layer 25 in this order in the thickness direction. In this example, the barrier base material 20 is positioned such that the barrier coating layer 25 faces the bonding layer 40A side. The barrier coating layer 25 and the bonding layer 40A may be in contact.

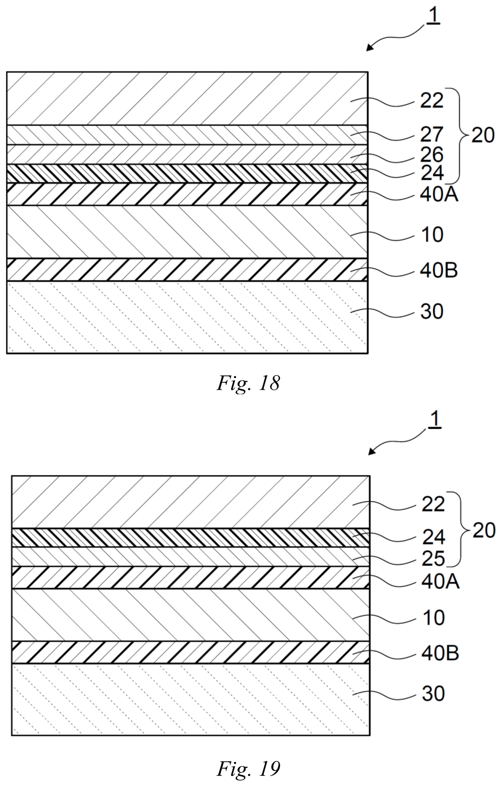

Fig. 18 is similar to Fig. 16, except that the barrier base material 20 includes an adhesive resin layer 27 between the polypropylene resin layer 22 and the surface resin layer 26.

Fig. 19 is similar to Fig. 17, except that the barrier base material 20 includes a polypropylene resin layer 22, a vapor deposition film 24, and a barrier coating layer 25 in this order in the thickness direction.

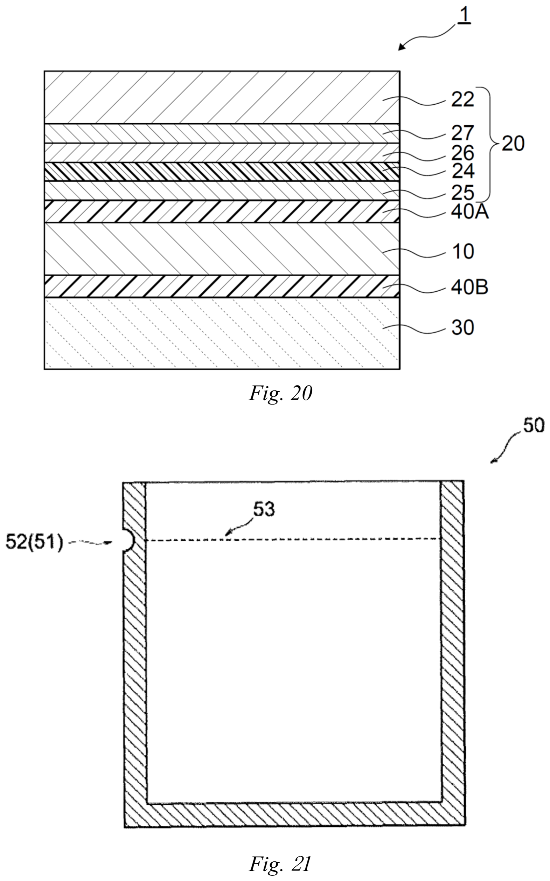

Fig. 20 is similar to Fig. 17, except that the barrier base material 20 includes an adhesive resin layer 27 between the polypropylene resin layer 22 and the surface resin layer 26.

Specific examples of layer configurations of the laminate according to the present disclosure will now be presented. "/" represents a boundary between a layer and another. "OPP film" represents a polypropylene resin base material that has undergone stretching treatment.
(1) OPP film/printed layer/bonding layer/sealant layer
(2) Barrier base material/printed layer/bonding layer/sealant layer
(3) OPP film/printed layer/bonding layer/barrier base material/bonding layer/sealant layer
(4) Barrier base material/printed layer/bonding layer/OPP film/bonding layer/sealant layer
(5) Barrier base material/printed layer/bonding layer/barrier base material/bonding layer/sealant layer
(6) OPP film/printed layer/bonding layer/OPP film/bonding layer/sealant layer

The laminate according to the present disclosure includes, in an embodiment, at least the three elements of a polypropylene resin base material, a barrier base material, and a sealant layer. By virtue of this, gas barrier properties (oxygen barrier properties and water vapor barrier properties in particular) can be further improved.

When the first base material is a barrier base material, the first base material is, in an embodiment, positioned such that its vapor deposition film faces the sealant layer side, and that its polypropylene resin layer faces opposite the sealant layer.

When the second base material is a barrier base material, the second base material is, in an embodiment, positioned such that its vapor deposition film faces the first base material side, and that its polypropylene resin layer faces the sealant layer side, or, alternatively, the second base material is positioned such that its vapor deposition film faces the sealant layer side, and that its polypropylene resin layer faces the first base material side. Of these, it is particularly preferred, when the second base material is a barrier base material, that the second base material be positioned such that its vapor deposition film faces the first base material side, and that its polypropylene resin layer faces the sealant layer side, because in that case the deterioration of the vapor deposition film, for example, can be further limited.

In an embodiment of the laminate according to the present disclosure, the first base material is a polypropylene resin base material, and the second base material is a barrier base material (see Fig. 9 to Fig. 14). In this embodiment, the laminate includes a polypropylene resin base material, a barrier base material, and a sealant layer in this order in the thickness direction. A laminate in such a configuration exhibits higher gas barrier properties when subjected to, for example, heat treatment because the vapor deposition film is adequately protected during the treatment. A laminate in this embodiment, furthermore, exhibits a smaller percentage of thermal shrinkage in the case where it is subjected to heat treatment and thus is better in terms of suitability for shaping into a bag.

The percentage of the single polypropylene material (hereinafter also referred to as "the percentage monomaterialization") in the laminate according to the present disclosure is preferably 80% by mass or more, more preferably 85% by mass or more, even more preferably 88% by mass or more, particularly preferably 90% by mass or more. When this is the case, a monomaterialized packaging container, for example, can be produced using the laminate, whereby the recycling suitability of the packaging container can be improved. The higher the percentage monomaterialization, the better; however, its upper limit may be, for example, 99% by mass or 98% by mass.

In the present disclosure, the above percentage monomaterialization refers to the percentage of the single polypropylene material relative to the total mass of the laminate. When a layer contains polypropylene as its main component (i.e., more than 50% by mass), however, the above percentage monomaterialization is calculated assuming that polypropylene constitutes 100% by mass of this layer. For example, in the case of a sealant layer composed of 80% by mass polypropylene, 5% by mass thermoplastic elastomer, and 15% by mass polyethylene, the above percentage monomaterialization is calculated assuming that the sealant layer is composed of 100% by mass polypropylene.

### <Barrier Base Material>

The barrier base material includes a polypropylene resin layer and a vapor deposition film. The barrier base material includes, in an embodiment, a polypropylene resin layer and a vapor deposition film provided on one surface of the resin layer. The polypropylene resin layer is a layer that has undergone stretching treatment. The barrier base material may include a surface coating layer or a surface resin layer between the polypropylene resin layer and the vapor deposition film. The barrier base material may include a barrier coating layer on the vapor deposition film.

### (Polypropylene Resin Layer)

The polypropylene resin layer contains polypropylene as its main component, or contains polypropylene at a percentage of more than 50% by mass. By allowing the barrier base material to include a polypropylene resin layer, the oil resistance of a packaging container produced using the barrier base material, for example, can be improved.

The polypropylene may be any of a propylene homopolymer, a propylene random copolymer, or a propylene block copolymer or may be a mixture of two or more selected from these.

A propylene homopolymer is a polymer solely composed of propylene. A propylene random copolymer is a random copolymer of propylene and monomer(s) such as an α-olefin other than propylene. A propylene block copolymer is a copolymer having a polymer block formed of propylene and a polymer block formed of at least monomer(s) such as an α-olefin other than propylene. The polymer block formed of at least monomer(s) such as an α-olefin other than propylene may be a polymer block formed of propylene and an α-olefin other than propylene.

Examples of α-olefins include α-olefins containing 2 or more and 20 or fewer carbons. Specific examples include ethylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene.

Among types of polypropylene, it is particularly preferred to use a random copolymer, when considered from the viewpoint of transparency. When priority is given to the rigidity and heat resistance of the packaging container, it is preferred to use a homopolymer. When priority is given to the resistance to fall impact of the packaging container, it is preferred to use a block copolymer.

The melt flow rate (MFR) of the polypropylene may be, in an embodiment, 0.1 g/10 minutes or more and 50 g/10 minutes or less or may be 0.3 g/10 minutes or more and 30 g/10 minutes or less for film formation and working suitability reasons. The MFR of the polypropylene is measured under the conditions of a temperature of 230°C and a load of 2.16 kg according to JIS K7210.

The polypropylene may be biomass-derived polypropylene or mechanically recycled or chemically recycled polypropylene for reduced environmental impact.

The percentage of polypropylene in the polypropylene resin layer is preferably 70% by mass or more, more preferably 80% by mass or more, even more preferably 90% by mass or more, still more preferably 95% by mass or more.

The polypropylene resin layer may contain resin materials other than polypropylene. Examples of resin materials include polyolefins, such as polyethylene, (meth)acrylic resins, vinyl resins, cellulose resins, polyamides, polyesters, and ionomer resins.

The polypropylene resin layer may contain additives. Examples of additives include crosslinking agents, antioxidants, anti-blocking agents, slipping agents, ultraviolet absorbers, photostabilizers, fillers, reinforcing agents, antistatic agents, pigments, and reforming resins.

The polypropylene resin layer is a layer that has undergone stretching treatment. Through this, the heat resistance, resistance to fall impact, waterproofness, and dimensional stability of the laminate, for example, can be improved. A laminate including such a resin layer is suitable as, for example, a packaging material constituting a packaging container intended to undergo boiling treatment or retort treatment.

The stretching treatment may be uniaxial orientation or may be biaxial orientation.

The stretch ratio when stretching is performed in the longitudinal direction (the direction of flow of the base material, or the MD direction) is preferably 2 or more and 15 or less, more preferably 5 or more and 13 or less. The stretch ratio when stretching is performed in the transverse direction (the direction perpendicular to the MD direction, or the TD direction) is preferably 2 or more and 15 or less, more preferably 5 or more and 13 or less. By setting the stretch ratios to 2 or more, the strength and heat resistance of the polypropylene resin layer can be further improved, and, furthermore, suitability for printing on the polypropylene resin layer can be improved. From the viewpoint of the fracture limits of the polypropylene resin layer, it is preferred that the stretch ratios be 15 or less.

The polypropylene resin layer may have, in an embodiment, undergone surface treatment. Through this, adhesion between the polypropylene resin layer and another layer, for example, can be improved. Examples of methods for surface treatment include physical treatments, such as corona discharge treatment, ozonation, low-temperature plasma treatment using, for example, an oxygen gas and/or a nitrogen gas, and glow discharge treatment, and chemical treatments, such as oxidation treatment using chemicals.

An adhesion-promoting layer may be provided on the surface of the polypropylene resin layer.

The polypropylene resin layer may have a single-layer structure or may have a multilayer structure.

The thickness of the polypropylene resin layer is preferably 10 µm or more and 100 µm or less, more preferably 10 µm or more and 50 µm or less. When the thickness is equal to or more than the lower limits, the strength and heat resistance of the laminate, for example, can be further improved. When the thickness is equal to or less than the upper limits, the working suitability of the laminate, for example, can be further improved.

### (Surface Coating Layer)

The barrier base material includes, in an embodiment, a surface coating layer containing a resin material having a polar group between the polypropylene resin layer and the vapor deposition film. By providing a surface coating layer containing a resin material having a polar group, the adhesion of the vapor deposition film formed on this surface coating layer can be improved, and gas barrier properties can also be improved at the same time.

In this embodiment, the barrier base material includes a resin base material having a polypropylene resin layer and a surface coating layer and also includes a vapor deposition film provided on the surface coating layer. This barrier base material includes a polypropylene resin layer, a surface coating layer, and a vapor deposition film in this order in the thickness direction.

Polar group refers to a group containing one or more heteroatoms, and examples include an ester group, an epoxy group, a hydroxyl group, an amino group, an amide group, a urethane group, a carboxy group, a carbonyl group, a carboxylic anhydride group, a sulfo group, a thiol group, and a halogen group. Of these, a carboxy group, a carbonyl group, an ester group, a hydroxyl group, an amino group, an amide group, and a urethane group are particularly preferred when considered from the viewpoint of the ease of lamination of the packaging container. A carboxy group, a hydroxyl group, an amide group, and a urethane group are more preferred.

Examples of resin materials having a polar group include ethylene-vinyl alcohol copolymers (EVOH), polyvinyl alcohol (PVA), polyesters, polyethyleneimines, hydroxyl-containing (meth)acrylic resins, nylon 6, nylon 6,6, MXD nylon, amorphous nylon, and other polyamides, and polyurethanes. Of these, ethylene-vinyl alcohol copolymers, polyvinyl alcohol, hydroxyl-containing (meth)acrylic resins, polyamides, and polyurethanes are more preferred.

The surface coating layer can be formed using, for example, a water-based emulsion or a solvent-based emulsion. Examples of water-based emulsions include a polyamide emulsion, a polyethylene emulsion, and a polyurethane emulsion. Examples of solvent-based emulsions include a (meth)acrylic resin emulsion and a polyester emulsion.

The percentage of the resin material having a polar group in the surface coating layer is preferably 70% by mass or more, more preferably 80% by mass or more, even more preferably 90% by mass or more.

The surface coating layer may contain resin materials other than the resin material having a polar group.

The surface coating layer may contain additives as mentioned above.

The percentage of the thickness of the surface coating layer relative to the total thickness of the resin base material having a polypropylene resin layer and a surface coating layer is preferably 0.08% or more and 20% or less, more preferably 0.2% or more and 15% or less, even more preferably 1% or more and 10% or less, still more preferably 1% or more and 5% or less. When this percentage is equal to or more than the lower limits, the adhesion of the vapor deposition film, for example, can be further improved, gas barrier properties can be further improved, and, furthermore, the lamination strength of the packaging container can be further improved. When this percentage is equal to or less than the upper limits, the working suitability of the resin base material and the recycling suitability of the packaging container, for example, can be further improved.

The thickness of the surface coating layer is preferably 0.02 µm or more and 10 µm or less, more preferably 0.05 µm or more and 10 µm or less, even more preferably 0.1 µm or more and 10 µm or less, still more preferably 0.2 µm or more and 5 µm or less. When the thickness is equal to or more than the lower limits, the adhesion of the vapor deposition film, for example, can be further improved, gas barrier properties can be further improved, and, furthermore, the lamination strength of the packaging container can be further improved. When the thickness is equal to or less than the upper limits, the working suitability of the resin base material and the recycling suitability of the packaging container, for example, can be further improved.

For example, by shaping polypropylene or a resin composition containing polypropylene into a film by utilizing the T-die method, inflation, or other techniques to obtain a resin film, then stretching this resin film, and applying a coating liquid for forming a surface coating layer to the stretched resin film and drying it, a resin base material having a polypropylene resin layer and a surface coating layer can be produced.

### (Surface Resin Layer)

The barrier base material includes, in an embodiment, a surface resin layer containing a resin material having a melting point of 180°C or more (hereinafter also referred to as "high-melting resin material") between the polypropylene resin layer and the vapor deposition film. By providing a surface resin layer containing a high-melting resin material, the adhesion of the vapor deposition film formed on this surface resin layer can be improved, and gas barrier properties can also be improved at the same time.

A packaging bag produced using a laminate including such a surface resin layer, furthermore, has high lamination strength.

In an embodiment, the surface resin layer may be provided on the polypropylene resin layer. That is, the surface resin layer may be adjacent to the polypropylene resin layer.

In an embodiment, when an adhesive resin layer is included between the polypropylene resin layer and the surface resin layer, the adhesive resin layer may be provided on the polypropylene resin layer, and the surface resin layer may be provided on the adhesive resin layer. That is, the adhesive resin layer may be adjacent to the polypropylene resin layer, and the surface resin layer may be adjacent to the adhesive resin layer.

In this embodiment, the barrier base material includes a resin base material having a polypropylene resin layer and a surface resin layer and also includes a vapor deposition film provided on the surface resin layer. This barrier base material includes a polypropylene resin layer, a surface resin layer, and a vapor deposition film in this order in the thickness direction.

The melting point of the high-melting resin material is preferably 185°C or more, more preferably 190°C or more, even more preferably 205°C or more. When the melting point is equal to or higher than the lower limits, the adhesion of the vapor deposition film, for example, can be further improved, gas barrier properties can be further improved, and, furthermore, the lamination strength of the packaging container can be further improved.

The melting point of the high-melting resin material is preferably 265°C or less, more preferably 260°C or less, even more preferably 250°C or less. When this is the case, the film formation of the resin base material, for example, can be improved.

Herein, the melting point can be measured according to JIS K7121: 2012 (Testing Methods for Transition Temperatures of Plastics). Specifically, a DSC curve is measured at a temperature elevation rate of 10°C/minute by differential scanning calorimetry (DSC), from which the melting point can be determined.

The difference between the melting point TA of the high-melting resin material contained in the surface resin layer and the melting point TB of the polypropylene contained in the polypropylene resin layer is preferably 20°C or more. The difference between the melting point TA and the melting point TB is preferably 80°C or less, more preferably 60°C or less.

When the difference between the melting point TA and the melting point TB is equal to or more than the lower limit, adhesion between the surface resin layer and the vapor deposition film can be further improved, and gas barrier properties can be further improved. The lamination strength of the packaging bag, furthermore, can be further improved.

In addition, when the difference between the melting point TA and the melting point TB is equal to or less than the upper limits, the film formation of the polypropylene resin base material can be further improved.

The high-melting resin material preferably has a polar group. Polar group refers to a group containing one or more heteroatoms, and examples include an ester group, an epoxy group, a hydroxyl group, an amino group, an amide group, a urethane group, a carboxy group, a carbonyl group, a carboxylic anhydride group, a sulfo group, a thiol group, and a halogen group. Of these, a hydroxyl group, an ester group, an amino group, an amide group, a carboxy group, and a carbonyl group are particularly preferred when considered from the viewpoint of the gas barrier properties and lamination strength of the packaging container. An amide group is more preferred.

The high-melting resin material only needs to have a melting point of 180°C or more, and examples include polyolefins, vinyl resins, (meth)acrylic resins, polyamides, polyimides, polyesters, cellulose resins, and ionomer resins. For example, resin materials having a melting point of 180°C or more and having a polar group are preferred, with ethylene-vinyl alcohol copolymers, polyvinyl alcohol, polyesters, and nylon 6, nylon 6,6, MXD nylon, amorphous nylon, and other polyamides being more preferred.

By using such a resin material, the adhesion of the vapor deposition film formed on the surface resin layer can be significantly improved, and decreases in gas barrier properties can be effectively limited.

In an embodiment, the high-melting resin material is preferably a polyamide. By using a polyamide as a high-melting resin material, decreases in gas barrier properties can be limited even after the laminate is bent, and the heat resistance of the laminate can be improved. Decreases in gas barrier properties, furthermore, can be limited even after the laminate is subjected to retort treatment and boiling treatment, which will be described later. The high-melting resin material is more preferably nylon 6.

The percentage of the high-melting resin material in the surface resin layer is preferably 70% by mass or more, more preferably 80% by mass or more, even more preferably 90% by mass or more.

The surface resin layer may contain resin materials other than the high-melting resin material.

The surface resin layer may contain additives as mentioned above.

The surface resin layer may have undergo surface treatment as mentioned above.

The percentage of the thickness of the surface resin layer relative to the total thickness of the resin base material having a polypropylene resin layer and a surface resin layer is preferably 1% or more and 10% or less, more preferably 1% or more and 5% or less. When this percentage is equal to or more than the lower limits, the adhesion of the vapor deposition film, for example, can be further improved, gas barrier properties can be further improved, and, furthermore, the lamination strength of the packaging container can be further improved. When this percentage is equal to or less than the upper limits, the film formation and working suitability of the resin base material and the recycling suitability of the packaging container, for example, can be further improved.

The thickness of the surface resin layer is preferably 0.1 µm or more and 5 µm or less, more preferably 0.1 µm or more and 4 µm or less. When the thickness is equal to or more than the lower limits, the adhesion of the vapor deposition film, for example, can be further improved, gas barrier properties can be further improved, and, furthermore, the lamination strength of the packaging container can be further improved. When the thickness is equal to or less than the upper limits, the film formation and working suitability of the resin base material and the recycling suitability of the packaging container, for example, can be further improved.

The resin base material can include, in an embodiment, an adhesive resin layer between the polypropylene resin layer and the surface resin layer. Through this, adhesion between these layers can be improved.

The adhesive resin layer can be formed using, for example, an adhesive resin. Examples of adhesive resins include polyethers, polyesters, polyurethanes, silicone resins, epoxy resins, vinyl resins, phenolic resins, polyolefins, and acid-modified forms of polyolefins. Of these, polyolefins and their acid-modified forms are particularly preferred from the viewpoint of the recycling suitability of the packaging container, with polypropylene and its acid-modified forms being more preferred. Polypropylene used in an adhesive resin layer can be a commercially available one. For example, ADMER resins, manufactured by Mitsui Chemicals, Inc., can be used.

The thickness of the adhesive resin layer is, for example, 1 µm or more and 15 µm or less. When the thickness is 1 µm or more, adhesion between the polypropylene resin layer and the surface resin layer, for example, can be further improved. When the thickness is 15 µm or less, the working suitability of the resin base material, for example, can be further improved.

A resin base material having a polypropylene resin layer, optionally an adhesive resin layer, and a surface resin layer is, in an embodiment, a coextruded stretched resin film. A coextruded stretched resin film can be produced by, for example, shaping materials into a film by utilizing the T-die method, inflation, or other techniques to obtain a multilayer film and then stretching this multilayer film. By using inflation, the stretching of the multilayer film may be performed simultaneously with film formation.

The stretching treatment may be uniaxial orientation or may be biaxial orientation.

The stretch ratio when stretching is performed in the MD direction is preferably 2 or more and 15 or less, more preferably 5 or more and 13 or less. The stretch ratio when stretching is performed in the TD direction is preferably 2 or more and 15 or less, more preferably 5 or more and 13 or less.

### (Vapor Deposition Film)

The barrier base material includes, in an embodiment, a vapor deposition film composed of an inorganic oxide. The barrier base material includes, in an embodiment, a vapor deposition film on a surface coating layer or a surface resin layer. Through this, the gas barrier properties of the laminate, specifically oxygen barrier properties and water vapor barrier properties, can be improved. With a packaging container produced using the laminate, a decrease in the mass of the contents in the packaging container can be reduced.

Examples of inorganic oxides include aluminum oxide (alumina), silicon oxide (silica), magnesium oxide, calcium oxide, zirconium oxide, titanium oxide, boron oxide, hafnium oxide, barium oxide, and silicon oxycarbide (carbon-containing silicon oxide). Of these, silica, silicon oxycarbide, and alumina are particularly preferred.

In an embodiment, it is more preferred that the inorganic oxide be silica because in that case aging treatment after the formation of the vapor deposition film is unnecessary. In an embodiment, it is more preferred that the inorganic oxide be carbon-containing silicon oxide because in that case decreases in gas barrier properties can be limited even when the laminate is bent.

The thickness of the vapor deposition film is preferably 1 nm or more and 150 nm or less, more preferably 5 nm or more and 60 nm or less, even more preferably 10 nm or more and 40 nm or less. When the thickness is equal to or more than the lower limits, the oxygen barrier properties and water vapor barrier properties of the laminate, for example, can be further improved. When the thickness is equal to or less than the upper limits, the development of cracks in the vapor deposition film, for example, can be reduced, and, furthermore, the recycling suitability of the packaging container can be improved.

The surface of the vapor deposition film has preferably undergone surface treatment as mentioned above. Through this, adhesion between the vapor deposition film and the adjacent layer can be improved.

Examples of methods for forming the vapor deposition film include physical vapor deposition (PVD) methods, such as vacuum deposition, sputtering, and ion plating, and chemical vapor deposition (CVD) methods, such as plasma chemical vapor deposition, thermal chemical vapor deposition, and photochemical vapor deposition.

The vapor deposition film may be single-layer, formed through one deposition step, or may be multilayer, formed through multiple deposition steps. When the vapor deposition film is multilayer, the layers may be composed of the same inorganic oxide or may be composed of different inorganic oxides. The layers may be formed using the same method or may be formed using different methods.

The vapor deposition film in the barrier base material is preferably a vapor deposition film formed by CVD, more preferably a carbon-containing silicon oxide deposition film formed by CVD. When this is the case, decreases in gas barrier properties can be limited even when the laminate is bent.

A carbon-containing silicon oxide deposition film contains silicon, oxygen, and carbon.

In an embodiment of a carbon-containing silicon oxide deposition film, the percentage of carbon C is preferably 3% or more and 50% or less, more preferably 5% or more and 40% or less, even more preferably 10% or more and 35% or less, relative to a total of 100% of the three elements of silicon, oxygen, and carbon. By setting the percentage of carbon C within these ranges, decreases in gas barrier properties, for example, can be limited even when the laminate is bent.

Herein, the percentages of elements are based on the number of moles.

In an embodiment of a carbon-containing silicon oxide deposition film, the percentage of silicon Si is preferably 1% or more and 45% or less, more preferably 3% or more and 38% or less, even more preferably 8% or more and 33% or less, relative to a total of 100% of the three elements of silicon, oxygen, and carbon. The percentage of oxygen O is preferably 10% or more and 70% or less, more preferably 20% or more and 65% or less, even more preferably 25% or more and 60% or less, relative to a total of 100% of the three elements of silicon, oxygen, and carbon. By setting the percentage of silicon Si and the percentage of oxygen O within these ranges, decreases in gas barrier properties, for example, can be further limited even when the laminate is bent.

In an embodiment of a carbon-containing silicon oxide deposition film, the percentage of oxygen O is preferably higher than the percentage of carbon C, and the percentage of silicon Si is preferably lower than the percentage of carbon C. The percentage of oxygen O is preferably higher than the percentage of silicon Si. That is, the percentages preferably become lower in the order of percentage O, percentage C, and percentage Si. When this is the case, decreases in gas barrier properties, for example, can be further limited even when the laminate is bent.

Percentage C, percentage Si, and percentage O in a carbon-containing silicon oxide deposition film can be measured through a narrow-scan analysis under the following measurement conditions by X-ray photoelectron spectroscopy (XPS).

### (Measurement Conditions)

Equipment used: "ESCA-3400" (manufactured by Kratos Analytical Ltd.)
[1] Spectral collection conditions
   Incident X-rays: MgKα (monochromated X-rays; hv = 1253.6 eV)
   X-ray power: 150 W (10 kV·15 mA)
   X-ray scan area (region measured): Approximately 6 mmϕ
   Photoelectron acceptance angle: 90 degrees
[2] Ion sputtering conditions
   Ion species: Ar⁺
   Acceleration voltage: 0.2 (kV)
   Emission current: 20 (mA)
   Etching range: 10 mmϕ
   Ion sputtering duration: 30 seconds, followed by spectral collection

### (Barrier Coating Layer)

The barrier base material can, in an embodiment, further include a barrier coating layer on the vapor deposition film. That is, the barrier base material may further include a barrier coating layer on the surface of the vapor deposition film opposite the surface closer to the polypropylene resin layer. Through this, the oxygen barrier properties and water vapor barrier properties of the laminate, for example, can be improved.

In an embodiment, the barrier coating layer contains a gas barrier resin. Examples of gas barrier resins include ethylene-vinyl alcohol copolymers, polyvinyl alcohol, polyacrylonitrile, polyesters, nylon 6, nylon 6,6, polymeta-xylylene adipamide, and other polyamides, polyurethanes, and (meth)acrylic resins. Of these, polyvinyl alcohol is particularly preferred from the viewpoints of oxygen barrier properties and water vapor barrier properties.

By incorporating polyvinyl alcohol in the barrier coating layer, furthermore, the development of cracks in the vapor deposition film can be effectively prevented.

The percentage of the gas barrier resin in the barrier coating layer is preferably 50% by mass or more, more preferably 60% by mass or more, even more preferably 70% by mass or more, still more preferably 75% by mass or more, and preferably is 95% by mass or less, more preferably 90% by mass or less. For example, the percentage is 50% by mass or more and 90% by mass or less. With such a configuration, the gas barrier properties of the barrier coating layer, for example, can be improved.

The barrier coating layer may contain additives as mentioned above.

The thickness of a barrier coating layer containing a gas barrier resin is preferably 0.01 µm or more and 10 µm or less, more preferably 0.1 µm or more and 5 µm or less. By setting the thickness of the barrier coating layer to 0.01 µm or more, gas barrier properties, for example, can be further improved. By setting the thickness of the barrier coating layer to 10 µm or less, the working suitability of the laminate and the recycling suitability of the packaging container, for example, can be improved.

When the thickness of the barrier coating layer falls within these ranges, furthermore, recycling suitability is not impaired even when the gas barrier resin is a resin material different from polypropylene.

The barrier coating layer can be formed by, for example, dissolving or dispersing the materials, such as a gas barrier resin, in water or an appropriate organic solvent, applying the resulting coating liquid, and drying the applied liquid.

In another embodiment, the barrier coating layer is a gas barrier coating film formed by mixing a metal alkoxide, at least one water-soluble polymer, and optionally a silane coupling agent, optionally adding water, an organic solvent, and a sol-gel catalyst, applying the resulting gas barrier composition onto the vapor deposition film, and drying the applied composition. The gas barrier coating film contains a hydrolysis and polycondensation product resulting from the hydrolysis and polycondensation of the metal alkoxide and other materials through the sol-gel process. By providing such a barrier coating layer on the vapor deposition film, the development of cracks in the vapor deposition film can be effectively reduced.

The metal alkoxide is represented by, for example, formula (1).

R¹ₙM(OR²)ₘ (1)

In formula (1), R¹ and R² each independently represent an organic group containing one or more and eight or fewer carbons, M represents a metallic atom, n represents an integer of 0 or more, m represents an integer of 1 or more, and n + m represents the valence of M.

Examples of organic groups for R¹ and R² include alkyl groups containing one or more and eight or fewer carbons, such as a methyl group, an ethyl group, an n-propyl group, an isopropyl group, an n-butyl group, an isobutyl group, a sec-butyl group, a t-butyl group, an n-hexyl group, and an n-octyl group.

The metallic atom M is, for example, silicon, zirconium, titanium, or aluminum.

Examples of metal alkoxides include alkoxysilanes, such as tetramethoxysilane, tetraethoxysilane, tetrapropoxysilane, and tetrabutoxysilane.

Examples of water-soluble polymers include hydroxyl-containing polymers, such as polyvinyl alcohol and ethylene-vinyl alcohol copolymers. Depending on the desired physical characteristics, such as oxygen barrier properties, water vapor barrier properties, waterproofness, and weatherability, any one of polyvinyl alcohol or an ethylene-vinyl alcohol copolymer may be used, both may be used in combination, or a gas barrier coating film obtained using polyvinyl alcohol and a gas barrier coating film obtained using an ethylene-vinyl alcohol copolymer may be stacked. The amount of water-soluble polymer used is preferably 3 parts by mass or more and 500 parts by mass or less relative to 100 parts by mass of the metal alkoxide. By setting the amount of water-soluble polymer in the gas barrier coating film equal to or more than the lower limit, the oxygen barrier properties and water vapor barrier properties of the laminate, for example, can be further improved. By setting the amount of water-soluble polymer in the gas barrier coating film equal to or less than the upper limit, furthermore, the ease of formation of the gas barrier coating film can be improved.

The silane coupling agent can be a known organoalkoxysilane containing an organic reactive group. Organoalkoxysilanes having an epoxy group are preferred, with examples including γ-glycidoxypropyltrimethoxysilane, γ-glycidoxypropylmethyldiethoxysilane, and β-(3,4-epoxycyclohexyl)ethyltrimethoxysilane. The amount of silane coupling agent used is preferably 1 part by mass or more and 20 parts by mass or less relative to 100 parts by mass of the metal alkoxide.

In the gas barrier coating film, the ratio of the metal alkoxide to the water-soluble polymer (metal alkoxide/water-soluble polymer) is preferably 4.5 or less, more preferably 3.5 or less, and preferably is 1.0 or more, more preferably 1.7 or more, on a mass basis. For example, the ratio is 1.0 or more and 4.5 or less.

By setting the ratio of the metal alkoxide to the water-soluble polymer equal to or less than the upper limits, decreases in gas barrier properties can be limited even after the laminate is bent.

By setting the ratio of the metal alkoxide to the water-soluble polymer equal to or more than the lower limits, the heat resistance of the laminate can be improved. Decreases in gas barrier properties, furthermore, can be limited even after the laminate is subjected to retort treatment and boiling treatment.

It should be noted that this ratio is a ratio on a solids basis.

On the surface of the gas barrier coating film, the ratio between silicon atoms and carbon atoms (Si/C) as measured by X-ray photoelectron spectroscopy (XPS) is preferably 1.60 or less, more preferably 1.35 or less, and preferably is 0.50 or more, more preferably 0.90 or more.

By setting the ratio between silicon atoms and carbon atoms equal to or less than the upper limits, decreases in gas barrier properties can be limited even after the laminate is bent.

By setting the ratio between silicon atoms and carbon atoms equal to or more than the lower limits, the heat resistance of the laminate can be improved. Decreases in gas barrier properties, furthermore, can be limited even after the laminate is subjected to retort treatment and boiling treatment.

These ranges of ratios between silicon atoms and carbon atoms can be achieved by adjusting the ratio of the metal alkoxide to the water-soluble polymer as appropriate.

It should noted that herein, the ratio between silicon atoms and carbon atoms is based on the number of moles.

The ratio between silicon atoms and carbon atoms in X-ray photoelectron spectroscopy (XPS) can be measured through a narrow-scan analysis under the following measurement conditions.

### (Measurement Conditions)

Equipment used: "ESCA-3400" (manufactured by Kratos Analytical Ltd.)
[1] Spectral collection conditions
   Incident X-rays: MgKα (monochromated X-rays; hv = 1253.6 eV)
   X-ray power: 150 W (10 kV·15 mA)
   X-ray scan area (region measured): Approximately 6 mmϕ
   Photoelectron acceptance angle: 90 degrees
[2] Ion sputtering conditions
   Ion species: Ar⁺
   Acceleration voltage: 0.2 (kV)
   Emission current: 20 (mA)
   Etching range: 10 mmϕ
   Ion sputtering duration: 30 seconds + 30 seconds + 60 seconds (a total of 120 seconds), followed by spectral collection

The gas barrier composition may contain water, preferably in a proportion of 0.1 moles or more, more preferably 0.5 moles or more, even more preferably 0.8 moles or more, and preferably 100 moles or less, more preferably 60 moles or less, even more preferably 2 moles or less, per mole of the metal alkoxide. By setting the amount of water equal to or more than the lower limits, the oxygen barrier properties and water vapor barrier properties of the laminate, for example, can be improved. By setting the amount of water equal to or less than the upper limits, the hydrolysis reaction, for example, can be performed rapidly.

The gas barrier composition may contain an organic solvent. Examples of organic solvents include methyl alcohol, ethyl alcohol, n-propyl alcohol, isopropyl alcohol, and n-butyl alcohol.

The sol-gel catalyst is preferably an acid or an amine compound.

Examples of acids include mineral acids, such as sulfuric acid, hydrochloric acid, and nitric acid; and organic acids, such as acetic acid and tartaric acid. The amount of acid used is preferably 0.001 moles or more and 0.05 moles or less per mole as the total number of moles of the metal alkoxide and the alkoxide content (e.g., the silicate moiety) of the silane coupling agent. By setting the amount of acid used equal to or more than the lower limit, the catalytic effect can be improved. By setting the amount of acid used equal to or less than the upper limit, a uniform thickness of the formed gas barrier coating film can be achieved.

For amine compounds, tertiary amines that are substantially insoluble in water and soluble in organic solvents are suitable for use. Examples include N,N-dimethylbenzylamine, tripropylamine, tributylamine, and tripentylamine. Of these, N,N-dimethylbenzylamine is particularly preferred.

The amount of amine compound used is preferably 0.01 parts by mass or more, more preferably 0.03 parts by mass or more, and preferably 1.0 part by mass or less, more preferably 0.3 parts by mass or less, relative to a total of 100 parts by mass of the metal alkoxide and the silane coupling agent. By setting the amount of amine compound used equal to or more than the lower limits, its catalytic effect can be improved. By setting the amount of amine compound used equal to or less than the upper limits, a uniform thickness of the formed gas barrier coating film can be achieved.

Examples of methods for applying the gas barrier composition include application means such as gravure roll coating and other types of roll coating, spray coating, spin coating, dipping, a brush, bar coating, and an applicator.

In the following, an embodiment of a method for forming a gas barrier coating film will be described.

By mixing materials such as a metal alkoxide, a water-soluble polymer, a sol-gel catalyst, water, an organic solvent, and optionally a silane coupling agent, a gas barrier composition is prepared. Within the composition, a polycondensation reaction proceeds gradually. Using conventional methods, the composition is applied onto the vapor deposition film and dried. Through this drying, the polycondensation of the metal alkoxide and the water-soluble polymer (and the silane coupling agent, when the composition contains a silane coupling agent) further proceeds, resulting in the formation of a layer of a composite polymer. Multiple composite polymer layers may be stacked by repeating this operation. For example, the applied composition is heated for 1 second or longer and 10 minutes or shorter, preferably at a temperature of 20°C or more, more preferably 50°C or more, even more preferably 70°C or more, and preferably at a temperature of 250°C or less, more preferably 220°C or less, even more preferably 150°C or less, still more preferably 120°C or less, particularly preferably 100°C or less. Through this, a gas barrier coating film can be formed.

The thickness of the gas barrier coating film is preferably 0.01 µm or more, more preferably 0.1 µm or more, and preferably is 100 µm or less, more preferably 10 µm or less, even more preferably 2 µm or less, still more preferably 1 µm or less, particularly preferably 0.5 µm or less. For example, the thickness is 0.01 µm or more and 100 µm or less. When this is the case, gas barrier properties, for example, can be improved, the development of cracks in the vapor deposition film can be reduced, and, furthermore, the recycling suitability of the packaging container can be improved.

### <Polypropylene Resin Base Material>

A polypropylene resin base material consists of a polypropylene resin layer as described above. A polypropylene resin base material is a base material that has undergone stretching treatment. The details of the polypropylene resin layer and the stretching treatment are as described above, and their detailed description in this section is omitted.

The polypropylene resin base material may have a single-layer structure or may have a multilayer structure.

The thickness of the polypropylene resin base material is preferably 10 µm or more and 100 µm or less, more preferably 10 µm or more and 50 µm or less. When the thickness is equal to or more than the lower limits, the strength and heat resistance of the laminate, for example, can be further improved. When the thickness is equal to or less than the upper limits, the working suitability of the laminate, for example, can be further improved.

### (Printed Layer)

The laminate according to the present disclosure may have a printed layer on the surface of the base material, such as a barrier base material or a polypropylene resin base material. The image formed in the printed layer is not particularly limited; characters, patterns, symbols, and combinations thereof, for example, are presented. The formation of the printed layer can be performed using a biomass-derived ink. Through this, environmental impact can be further reduced.

Examples of methods for forming the printed layer include printing methods known in the related art, such as gravure printing, offset printing, and flexography. Of these, flexography is particularly preferred from the viewpoint of the reduction of environmental impact.

The thickness of the printed layer is, for example, 0.5 µm or more and 3 µm or less.

### <Sealant Layer>

The laminate according to the present disclosure includes, as the sealant layer, a sealant film according to the present disclosure for laminates as described above. By virtue of this, the heat resistance, low-temperature sealability, and impact resistance, for example, of the laminate can be improved.

The sealant layer (sealant film for laminates) contains a propylene-ethylene random copolymer at a percentage of 51% by mass or more in a first layer, and contains block polypropylene (a propylene-ethylene block copolymer) at a percentage of 51% by mass or more in each of a second layer and a third layer.

By using a propylene-ethylene random copolymer in a first layer, the low-temperature sealability of the sealant layer, and thus of the laminate, for example, can be increased. By using block polypropylene (a propylene-ethylene block copolymer) in a second layer and a third layer, furthermore, the heat resistance and impact resistance (resistance to fall impact) of the sealant layer, and thus of the laminate, for example, can be increased. Through these, suitability for shaping into a bag can be improved when a packaging container is produced using the laminate, and the likelihood of damage to the packaging container from impact from a fall can be reduced at the same time.

By virtue of the inclusion of a propylene-ethylene random copolymer and a propylene-ethylene block copolymer as main components in the sealant layer (sealant film for laminates), monomaterialization of the packaging container, for example, can be sought. Propylene-ethylene random copolymers and propylene-ethylene block copolymers fall into the category of polypropylene in the calculation of the percentage monomaterialization. As a result of this, there is no need to separate the base material (the first base material and the second base material) and the sealant layer after collecting a used packaging container, whereby the recycling suitability of the packaging container can be improved.

The sealant layer may contain additives as mentioned above.

The sealant layer may have undergone surface treatment as mentioned above.

### <Bonding Layer>

The laminate includes, in an embodiment, a bonding layer between the base material (the first base material) and the sealant layer. The laminate includes, in an embodiment, a first bonding layer between the first base material and the second base material. The laminate includes, in an embodiment, a second bonding layer between the second base material and the sealant layer. Through these, adhesion between the base material and the sealant layer, adhesion between the first base material and the second base material, and adhesion between the second base material and the sealant layer can be improved.

The bonding layer is composed of an adhesive. The adhesive may be any of a one-component adhesive, a two-component adhesive, or a non-curing adhesive. The adhesive may be a solventless adhesive or may be a solvent-based adhesive. The laminate according to the present disclosure includes, in an embodiment, at least the three elements of a polypropylene resin base material, a barrier base material, and a sealant layer. By virtue of this, the laminate can be manufactured without direct application of an adhesive onto the vapor deposition film when the laminate is manufactured using an adhesive. The deterioration of the vapor deposition film, therefore, can be limited.

Examples of solventless adhesives, or solventless lamination adhesives, include polyether adhesives, polyester adhesives, silicone adhesives, epoxy adhesives, and polyurethane adhesives. Of these, polyurethane adhesives are particularly preferred, with two-component polyurethane adhesives being more preferred.

A solventless adhesive is, in an embodiment, a two-component adhesive including a base ingredient and a curing agent. The weight-average molecular weight (Mw) of a polymeric constituent contained in the base ingredient is preferably 800 or more and 10,000 or less, more preferably 1,200 or more and 4,000 or less, for coating suitability reasons. The polydispersity (Mw/Mn) of the polymeric constituent contained in the base ingredient is preferably 2.8 or less, more preferably 1.2 or more and 2.7 or less, even more preferably 1.5 or more and 2.6 or less, particularly preferably 2.0 or more and 2.5 or less. In this context, Mn is the number-average molecular weight of the polymeric constituent contained in the base ingredient. Each average molecular weight is measured by gel permeation chromatography (GPC) according to JIS K7252-1 (2008) and is a polystyrene-equivalent value.

Examples of solvent-based adhesives include rubber adhesives, vinyl adhesives, olefin adhesives, silicone adhesives, epoxy adhesives, phenolic adhesives, and polyurethane adhesives. Of these, polyurethane adhesives are particularly preferred, with two-component polyurethane adhesives being more preferred.

In an embodiment, by forming the bonding layer using a solventless adhesive, the residual solvent content, specifically the residual organic solvent content, of the laminate, for example, can be further reduced. The laminate according to the present disclosure includes a polypropylene resin layer. When the laminate according to the present disclosure is produced using a solvent-based adhesive, therefore, the temperature during drying of the adhesive needs to be set lower compared with the case of a polyester-based laminate to prevent deterioration and thermal shrinkage of the laminate. In that case, the solvent in the adhesive may remain in the laminate without being sufficiently evaporated and removed, and an odor from the residual solvent may be left. By using a solventless adhesive, the residual solvent content can be further reduced.

Examples of such organic solvents include hydrocarbon solvents, such as toluene, xylene, n-hexane, and methylcyclohexane; ester solvents, such as ethyl acetate, n-propyl acetate, n-butyl acetate, and isobutyl acetate; alcohol solvents, such as methanol, ethanol, isopropyl alcohol, n-butyl alcohol, and isobutyl alcohol; and ketone solvents, such as acetone, methyl ethyl ketone, methyl isobutyl ketone, and cyclohexanone.

In an embodiment, by using a solventless adhesive, a thinner bonding layer, for example, can be formed compared with when a solvent-based adhesive is used. Through this, the percentage of polypropylene in the entire laminate can be further improved. Such a laminate is suitable for producing a monomaterialized packaging container.

The thickness of the bonding layer is, for example, 0.1 µm or more and 10 µm or less, preferably 0.2 µm or more and 8 µm or less, more preferably 0.5 µm or more and 6 µm or less. The thickness of the bonding layer may be 2 µm or less.

The method for manufacturing the laminate according to the present disclosure is not particularly limited; the laminate can be manufactured using methods known in the related art, such as dry lamination, hot-melt extrusion lamination, and sandwich lamination. For example, the laminate according to the present disclosure may be, in an embodiment, manufactured by joining the base material and the sealant film, or, alternatively, the first base material, the second base material, and the sealant film, by solventless lamination, in which a solventless adhesive is used, or may be manufactured by joining them by dry lamination, in which a solvent-based adhesive is used.

In the following, a two-component polyurethane adhesive will be described. This polyurethane adhesive is preferably, for example, an adhesive that includes a base ingredient containing a polyol compound, such as a polyester polyol, and a curing agent containing an isocyanate compound.

Examples of polyol compounds include polyester polyols, polyether polyols, polycarbonate polyols, and (meth)acrylic polyols. Of these, polyester polyols are particularly preferred.

A polyester polyol has two or more hydroxyl groups in one molecule. A polyester polyol has, for example, a polyester structure or a polyester-polyurethane structure as its backbone. A polyester polyol is obtained through, for example, a dehydrative condensation reaction between a polyhydric alcohol component and a polycarboxylic acid component or through transesterification or a ring-opening reaction.

Examples of polyhydric alcohol components include diols, such as ethylene glycol, propylene glycol, diethylene glycol, dipropylene glycol, 1,4-butanediol, 1,5-pentanediol, 3-methyl-1,5-pentanediol, 1,6-hexanediol, neopentyl glycol, and cyclohexane dimethanol; and trifunctional or higher-functionality polyols, such as glycerol, triethylolpropane, trimethylolpropane, pentaerythritol, and sorbitol.

Examples of polycarboxylic acid components include aliphatic polycarboxylic acids, alicyclic polycarboxylic acids, and aromatic polycarboxylic acids and their ester derivatives and acid anhydrides. Examples of aliphatic polycarboxylic acids include aliphatic dicarboxylic acids, such as succinic acid, adipic acid, azelaic acid, sebacic acid, dodecanedicarboxylic acid, maleic acid, fumaric acid, and dimer acid. Examples of alicyclic polycarboxylic acids include 1,3-cyclopentanedicarboxylic acid and 1,4-cyclohexanedicarboxylic acid. Examples of aromatic polycarboxylic acids include phthalic acid, isophthalic acid, terephthalic acid, trimellitic acid, pyromellitic acid, naphthalenedicarboxylic acid, naphthalic acid, biphenyldicarboxylic acid, and 1,2-bis(phenoxy)ethane-p,p'-dicarboxylic acid.

A polyester polyol can optionally be extended in advance using a polyisocyanate. Examples of polyisocyanates include diisocyanates, such as 1,6-hexamethylene diisocyanate, isophorone diisocyanate, norbornene diisocyanate, m-xylylene diisocyanate, α,α,α'α'-tetramethyl-m-xylylene diisocyanate, tolylene diisocyanate, naphthalene diisocyanate, and diphenylmethane diisocyanate; and biurets, isocyanurates, or trimethylolpropane adducts of diisocyanates.

The weight-average molecular weight (Mw) of the polyol compound, such as a polyester polyol, is preferably 800 or more and 10,000 or less, more preferably 1,200 or more and 4,000 or less, for coating suitability reasons. The polydispersity (Mw/Mn) of the polyol compound, such as a polyester polyol, is preferably 2.8 or less, more preferably 1.2 or more and 2.7 or less, even more preferably 1.5 or more and 2.6 or less, particularly preferably 2.0 or more and 2.5 or less. In this context, Mn is the number-average molecular weight of the polyol compound. Each average molecular weight is measured by gel permeation chromatography (GPC) according to JIS K7252-1 (2008) and is a polystyreneequivalent value.

An isocyanate compound has two or more isocyanate groups in one molecule.

Examples of isocyanate compounds include aromatic isocyanates and aliphatic isocyanates. The isocyanate compound may be a blocked isocyanate obtained through an addition reaction by an appropriate known and commonly used method using a known isocyanate-blocking agent.

Examples of isocyanate compounds include diisocyanates, such as tetramethylene diisocyanate, hexamethylene diisocyanate, norbornene diisocyanate, isophorone diisocyanate, diphenylmethane diisocyanate, hydrogenated diphenylmethane diisocyanate, m-xylylene diisocyanate, hydrogenated xylylene diisocyanate, tolylene diisocyanate, naphthalene diisocyanate, and α,α,α'α'-tetramethyl-m-xylylene diisocyanate; trimers of such diisocyanates; and adducts, biurets, and allophanates obtained by allowing such diisocyanate compounds to react with a small-molecule active hydrogen compound or its alkylene oxide adduct or with a polymeric active hydrogen compound.

Examples of small-molecule active hydrogen compounds include ethylene glycol, propylene glycol, diethylene glycol, dipropylene glycol, 1,4-butanediol, neopentyl glycol, 1,6-hexamethylene glycol, 1,8-octamethylene glycol, 1,4-cyclohexane dimethanol, meta-xylylene alcohol, 1,3-bishydroxyethylbenzene, 1,4-bishydroxyethylbenzene, trimethylolethane, trimethylolpropane, glycerol, pentaerythritol, erythritol, sorbitol, ethylenediamine, monoethanolamine, diethanolamine, triethanolamine, and meta-xylylenediamine. Examples of polymeric active hydrogen compounds include polyesters, polyether polyols, and polyamides.

### [Packaging Container]

The laminate according to the present disclosure is suitable for use in packaging material applications.

A packaging material is used to produce a packaging container. A packaging material includes a laminate according to the present disclosure. By using at least a packaging material including a laminate according to the present disclosure, a packaging container can be produced.

A packaging container according to the present disclosure includes a laminate according to the present disclosure (hereinafter also referred to simply as "laminate"). Examples of packaging containers include a packaging bag, a tube container, and a lidded container. A lidded container includes a container body having a holding portion and a lid joined (heat-sealed) to the container body so as to seal the holding portion.

The packaging container according to the present disclosure is, in an embodiment, suitable as a container for microwave heating or a boiling or retort container because it maintains gas barrier properties and deforms only to a small extent even when exposed to high-temperature treatment. The packaging container according to the present disclosure is also suitable as a boiling or retort container for microwave heating. The packaging container according to the present disclosure is particularly suitable as a boiling or retort pouch.

Examples of methods for heat sealing include bar sealing, revolving roller sealing, belt sealing, impulse sealing, radiofrequency sealing, and ultrasonic sealing.

Examples of packaging bags include packaging bags in various forms, such as the stand-up pouch type, the side-seal type, the two-side-seal type, the three-side-seal type, the four-side-seal type, the center-seal type, the pillow-seal type, the pleated-seal type, the flat-bottom-seal type, the squarebottom-seal type, and the gusset type.

The packaging container may include an easy-open portion. Examples of easy-open portions include a notch portion, which serves as a starting point for tearing the packaging container, and a half-cut line, formed using laser machining, a cutting knife, or other methods as a guideline during tearing of the packaging container.

The packaging container may include a steam vent mechanism. The steam vent mechanism is configured such that when the steam pressure inside the packaging container reaches a predetermined value or higher, the steam vent mechanism establishes connection between the inside and the outside of the packaging container to release the steam, while limiting the escape of steam at points other than the mechanism.

The steam vent mechanism includes, for example, a steam vent seal portion extending from a side seal portion toward the inside of the packaging container, and an unsealed portion isolated from the content-holding portion by the steam vent seal portion. The unsealed portion leads to the outside of the packaging container. After the contents are introduced and the opening is heat-sealed, the packaging container is heated, for example using a microwave. As a result of this, the internal pressure increases, and the steam vent seal portion detaches. The steam travels through the detached area of the steam vent seal portion and the unsealed portion and escapes to the outside of the packaging container.

In an embodiment, a packaging bag can be produced by folding a laminate according to the present disclosure in two such that the base material is positioned outside and the sealant layer inside, aligning the two halves, and heat-sealing, for example, their edges. In another embodiment, a packaging bag can be produced by aligning multiple laminates according to the present disclosure such that their sealant layers face each other, and heat-sealing, for example, their edges. The entire packaging bag may be composed of the laminate(s), or part of the packaging bag may be composed of the laminate(s).

In an embodiment, a laminate according to the present disclosure is used as the lid of a lidded container. A lidded container includes a container body having a holding portion and a lid joined (heat-sealed) to the container body so as to seal the holding portion. In this configuration, the lid, or the sealant layer of the laminate, and the container body have been heat-sealed together. Examples of shapes of the container body include a cup shape and a bottomed cylindrical shape. The container body is, for example, made of polystyrene, made of polypropylene, made of polyethylene, or made of paper.

Examples of contents that can be held in the packaging container include liquids, solids, powders, and gels. The contents may be a food or beverage or may be a non-food and non-beverage item, such as a chemical product, a cosmetic product, or a pharmaceutical product. By filling the contents into the packaging container and then heat-sealing the opening of the packaging container, the packaging container can be hermetically sealed.

As specific examples of packaging bags, a sachet and a stand-up pouch will be described below.

A sachet is a small packaging bag and is used to hold contents weighing, for example, 1 g or more and 200 g or less. Examples of contents that can be held in a sachet include sauce, soy sauce, dressing, ketchup, syrup, cooking liquor, and other liquid or viscous seasonings and ingredients; liquid soup, powdered soup, and fruit or vegetable juices; spices; liquid beverages, jelly drinks, instant foods, and other foods and beverages.

A stand-up pouch is used to hold contents weighing, for example, 50 g or more and 2000 g or less. Examples of contents that can be held in a stand-up pouch include shampoo, hair rinse, hair conditioner, hand soap, body soap, air freshener, chemical deodorizers, physical deodorizers, mothballs, and detergents; dressing, cooking oil, mayonnaise, and other liquid or viscous seasonings and ingredients; liquid beverages, jelly drinks, instant foods, and other foods and beverages; and creams.

In Fig. 21, a packaging bag 50 obtained by joining two laminates together is illustrated. The hatched areas indicate heat-sealed portions. The packaging bag 50 may include an easy-open portion 51. Examples of easy-open portions 51 include a notch portion 52, which serves as a starting point for tearing, and a half-cut line 53, formed using laser machining, a cutting knife, or other methods as a guideline during tearing.

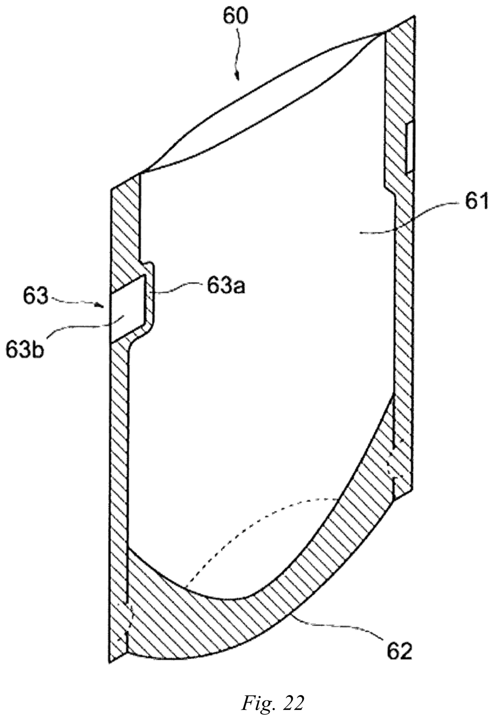

In Fig. 22, an example of a structure of a stand-up pouch is briefly illustrated. The hatched areas indicate heat-sealed portions. The stand-up pouch 60 includes, in an embodiment, a trunk (side sheet) 61 and a bottom (bottom sheet) 62. The side sheet 61 and the bottom sheet 62 may be portions of the same component or may be different components. The bottom sheet 62 supports the shape of the side sheet 61, thereby imparting self-standability to the pouch. As a result, the pouch can be formed as a stand-up type. Within the region enclosed by the side sheet 61 and the bottom sheet 62, a holding space, which is for holding contents, is created.

The stand-up pouch 60 may include a steam vent mechanism 63. The steam vent mechanism 63 includes a steam vent seal portion 63a extending from a side seal portion toward the inside of the packaging container, and an unsealed portion 63b isolated from the content-holding portion by the steam vent seal portion 63a. The unsealed portion 63b leads to the outside of the packaging container.

In a stand-up pouch, the trunk alone may be formed of a laminate according to the present disclosure, the bottom alone may be formed of a laminate according to the present disclosure, or both the trunk and the bottom may be formed of a laminate according to the present disclosure.

In an embodiment, the side sheet can be formed by shaping a laminate according to the present disclosure into a bag such that its sealant layer becomes the innermost layer. In an embodiment, the side sheet can be formed by preparing two laminates according to the present disclosure, aligning them such that their sealant layers face each other, and shaping the laminates into a bag by heat-sealing both side edges.

In another embodiment, the side sheet can be formed by preparing two laminates according to the present disclosure, aligning them such that their sealant layers face each other, folding two laminates into a V-shape such that the sealant layer is positioned outside, inserting the two folded laminates between the aligned laminates at both side edges, one on each side, and heat-sealing the laminates. With such a production method, a stand-up pouch having a trunk with side gussets is obtained.

In an embodiment, the bottom sheet can be formed by inserting a laminate according to the present disclosure between lower portions of a bag-shaped side sheet and heat-sealing them. More specifically, the bottom sheet can be formed by folding a laminate into a V-shape such that its sealant layer is positioned outside, inserting the folded laminate between lower portions of a bag-shaped side sheet, and heat-sealing them.

In an embodiment, the bottom is formed by preparing two laminates as described above, aligning them such that their sealant layers face each other, then folding another laminate as described above into a V-shape such that its sealant layer is positioned outside, placing it between lower portions of the laminates facing each other, and heat-sealing the laminates. Subsequently, the trunk is formed by heat-sealing the two edges adjacent to the bottom. In such a manner, a stand-up pouch according to an embodiment can be formed.

### [Mechanism of Operation]

In a laminate in which the percentage of a single polypropylene material is 80% by mass or more (hereinafter referred to as a propylene-based laminate), a first base material is a polypropylene resin base material that has undergone stretching treatment and is inferior in heat resistance compared with a base material made using PET. For example, a first base material in a propylene-based laminate easily deforms according to changes in temperature. For example, a first base material in a propylene-based laminate is likely to stretch during transportation and is likely to shrink upon heating.

When a propylene-based laminate is used as a packaging material, the propylene-based laminate is subjected to heat sterilization treatment, such as retort treatment or boiling treatment. A first base material and a sealant layer constituting a propylene-based laminate, therefore, are required to have heat resistance.

The sealant film according to the present disclosure for laminates, which is used as the sealant layer, includes a second layer (core layer). The second layer contains a second matrix resin component constituting 51% by mass or more and 85% by mass or less. The second matrix resin component is block propylene. Block propylene is superior in heat resistance because it has a sea-island structure in which an ethylene-propylene copolymeric elastomer is dispersed in a propylene homopolymer (homo-PP). By virtue of this, a propylene-based laminate made using the sealant film according to the present disclosure for laminates exhibits improved heat resistance.

Block propylene, however, has a high melting point. For this reason, when a propylene-based sealant film is entirely composed of block propylene, the heat-sealing temperature for a packaging material consisting of a propylene-based laminate made using the propylene-based sealant film is high. A high heat-sealing temperature may cause deformation of the first base material layer because the difference in melting point from that of the first base material constituting the propylene-based laminate is small.

In consideration of this, the sealant film according to the present disclosure for laminates includes a first layer (seal layer) that is in contact with the second layer and that, when used in a laminate, is positioned outermost in the laminate. The first layer contains a first matrix resin component constituting 51% by mass or more and 90% by mass or less. The first matrix resin component is a propylene-ethylene random copolymer. The melting point of a propylene-ethylene random copolymer is lower than the melting point of block propylene. By virtue of this, the heat-sealing temperature for a packaging material consisting of a propylene laminate made using a sealant film for laminates can be reduced compared with when a propylene-based sealant film is entirely composed of block propylene. Overall, the sealant film according to the present disclosure for laminates has both heat resistance and low-temperature sealability by virtue of including a first layer and a second layer containing different types of polypropylene as their main components.

The second layer (core layer), furthermore, has a sea-island structure in which at least part of second dispersed component(s) is dispersed in the second matrix resin component. The second dispersed component(s) includes at least polyethylene, with the polyethylene constituting 5% by mass or more, in the second layer. With the sealant film according to the present disclosure for laminates, the impact resistance of the second layer is increased by virtue of the dispersion of the second dispersed component(s) in the second matrix resin component. For example, when a packaging material consisting of a propylene laminate made using a sealant film for laminates is produced, and when a container formed of the packaging material falls, the likelihood of rupture of the container can be reduced.

Moreover, the first layer (seal layer) also has a sea-island structure in which at least part of first dispersed component(s) is dispersed in the first matrix resin component. The first dispersed component(s) includes at least polyethylene, with the polyethylene constituting 5% by mass or more, in the first layer. With the sealant film according to the present disclosure for laminates, the impact resistance of the first layer is increased by virtue of the dispersion of the first dispersed component(s) in the first matrix resin component, and thus the impact resistance of a propylene-based sealant film is further increased. In addition, because both the first layer and the second layer have a sea-island structure, compatibility between the structure of the first layer and the structure of the second layer is increased. By virtue of this, the occurrence of a fracture at the interface between the first layer and the second layer can be reduced. Compatibility between the structure of the first layer and the structure of the second layer also contributes to improving the impact resistance of the sealant film according to the present disclosure for laminates.

The present disclosure relates to, for example, [1] to [22] below.
[1] A sealant film for a laminate, the sealant film being for use in a laminate in which a percentage of polypropylene relative to a total amount of resin materials is 80% by mass or more, and
   the sealant film including at least a first layer that, when the sealant film is used in the laminate, is positioned at one of two surfaces of the laminate and a second layer in contact with the first layer, wherein:
   the first layer contains a first matrix resin component constituting 51% by mass or more and 90% by mass or less relative to a total amount of the first layer and at least one first dispersed component, and has a sea-island structure in which the first dispersed component is dispersed in the first matrix resin component;
   the second layer contains a second matrix resin component constituting 51% by mass or more and 85% by mass or less relative to a total amount of the second layer and at least one second dispersed component, and has a sea-island structure in which the second dispersed component is dispersed in the second matrix resin component;
   the first matrix resin component is a propylene-ethylene random copolymer;
   the first dispersed component includes at least one type of polyethylene constituting at least 5% by mass or more relative to the total amount of the first layer;
   the second matrix resin component is block polypropylene; and
   the second dispersed component includes at least one type of polyethylene constituting at least 5% by mass or more relative to the total amount of the second layer.
[2] The sealant film for a laminate according to [1], wherein the block polypropylene contains at least a propylene homopolymer and a block elastomer and has a sea-island structure in which the block elastomer is dispersed in the propylene homopolymer.
[3] The sealant film for a laminate according to [2], wherein the block elastomer is an ethylene-propylene elastomer.
[4] The sealant film for a laminate according to any of [1] to [3], wherein a percentage of the second dispersed component to the total amount of the second layer is 15% by mass or more and 49% by mass or less.
[5] The sealant film for a laminate according to any of [1] to [4], wherein a percentage of the first dispersed component to the total amount of the first layer is 10% by mass or more and 49% by mass or less.
[6] The sealant film for a laminate according to any of [1] to [5], wherein a percentage of the first dispersed component to the total amount of the first layer is smaller than a percentage of the second dispersed component to the total amount of the second layer.
[7] The sealant film for a laminate according to any of [1] to [6], wherein the second dispersed component further includes a second elastomer.
[8] The sealant film for a laminate according to [7], wherein the second elastomer is a propylene-ethylene elastomer or an ethylene-α olefin elastomer.
[9] The sealant film for a laminate according to [7] or [8], wherein, in the second dispersed component, a ratio of an amount of the second elastomer to an amount of the polyethylene is 0.5 or more and less than 1.0.
[10] The sealant films for a laminate according to [1] to [9], wherein the first dispersed component further includes a first elastomer.
[11] The sealant film for a laminate according to [10], wherein, in the first dispersed component, a ratio of an amount of the first elastomer to an amount of the polyethylene is 0.5 or more and less than 1.0.
[12] The sealant films for a laminate according to [1] to [11], wherein a ratio of a thickness of the second layer to a thickness of the first layer is 3.0 or more.
[13] The sealant film for a laminate according to any of [1] to [12], wherein the second layer has a thickness of 50 µm or more.
[14] The sealant film for a laminate according to any of [1] to [13], wherein the polyethylene in the second dispersed component includes linear low-density polyethylene (LLDPE) or low-density polyethylene (LDPE).
[15] The sealant film for a laminate according to any of [1] to [14], wherein the polyethylene in the second dispersed component is linear low-density polyethylene (LLDPE).
[16] The sealant film for a laminate according to any of [2] to [15], the sealant film further including a third layer in contact with the second layer, wherein:
   the third layer contains a third matrix resin component constituting 51% by mass or more and 85% by mass or less relative to a total amount of the third layer and at least one third dispersed component, and has a sea-island structure in which the third dispersed component is dispersed in the third matrix resin component; and
   the third matrix resin component is the block polypropylene.
[17] The sealant film for a laminate according to [16], wherein the third dispersed component includes any one or both of polyethylene and a third elastomer.
[18] The sealant film for a laminate according to any of [1] to [17], wherein a thickness of the sealant film is 30 µm or more and 200 µm or less.
[19] A laminate for use in a packaging material,
   the laminate including at least a first base material and a sealant layer, wherein:
   the sealant layer is formed of the sealant film for a laminate according to any of [1] to [18]; and
   a percentage of polypropylene relative to a total amount of resin materials is 80% by mass or more.
[20] The laminate according to [19], further including a second base material between the first base material and the sealant layer.
[21] A packaging container including the laminate according to [19] or [20].
[22] The packaging container according to [21], wherein the packaging container is a boiling or retort pouch.

### EXAMPLES

### [EXAMPLE 1]

### <Production of a Sealant Film for Laminates>

Resin composition 1, which was for the first layer and contained random PP 1: 75% by mass, PE 1: 13% by mass, and elastomer 1: 12% by mass, resin composition 2, which was for the second layer and contained block PP 1: 55% by mass, PE 1: 27% by mass, and elastomer 1: 18% by mass, and resin composition 3, which was for the third layer and contained block PP 1: 55% by mass, PE 1: 27% by mass, and elastomer 1: 18% by mass, were simultaneously extruded through a multilayer die, whereby an unstretched multilayer film in which the thicknesses of the first layer/the second layer/the third layer were 10 µm/40 µm/10 µm (hereinafter also referred to as "sealant film (Example 1)") was produced.

### [Propylene Homopolymer]

- Homo-PP 1: A propylene homopolymer (MFR, 2.5 g/10 min; density, 900 kg/m³)

### [Block Polypropylene]

- Block PP 1: A propylene-ethylene block copolymer (polymer portion formed of homo-PP (a), 80%; polymer portion formed of ethylene-propylene rubber (EPR) (b), 20%; MFR, 2.3 g/10 minutes)

### [Propylene-Ethylene Random Copolymer]

- Random PP 1: A propylene-ethylene random copolymer (MFR, 6 g/10 minutes; density, 0.890 g/cm³)

### [Polyethylene]

- PE 1: Linear low-density polyethylene (MFR, 2.0 g/10 minutes; density, 0.919 g/cm³)
- PE 2: Low-density polyethylene (MFR, 7.0 g/10 minutes; density, 0.920 g/cm³)
- PE 3: High-density polyethylene (MFR, 16.0 g/10 minutes; density, 0.960 g/cm³)

### [Thermoplastic Elastomers]

- Elastomer 1: A propylene-a olefin copolymer (melting point, 98°C; MFR (190°C), 3.0 g/10 minutes; MFR (230°C), 7.0 g/10 minutes)
- Elastomer 2: A propylene-a olefin copolymer (melting point, 66°C; MFR (190°C/2.16 kg), 3.6 g/10 minutes; MFR (230°C/2.16 kg), 6.7 g/10 minutes)

### <Production of a Transparent Barrier Base Material>

By diluting a hydroxyl-containing (meth)acrylic resin (number-average molecular weight, 25,000; glass transition temperature, 99°C; hydroxyl number, 80 mg KOH/g) using a solvent mixture of methyl ethyl ketone and ethyl acetate (mix ratio, 1:1) to a solids concentration of 10% by mass, a base ingredient was prepared. An ethyl acetate solution containing tolylene diisocyanate (solids content, 75% by mass) was added as a curing agent to the base ingredient, yielding a solution for the formation of a surface coating layer. The amount of curing agent used was 10 parts by mass per 100 parts by mass of the base ingredient.

A 20-µm thick biaxially oriented polypropylene film with one surface corona-treated (ME-1, manufactured by Mitsui Chemicals Tohcello, Inc.) was prepared. The solution for the formation of a surface coating layer described above was applied to the corona-treated surface of this film and dried, whereby a 0.5-µm thick surface coating layer was formed. In this manner, a resin base material was obtained.

On the surface coating layer of the resin base material, a 12-nm thick carbon-containing silicon oxide (silica) deposition film was formed using a low-temperature plasma chemical vapor deposition system that had been in practical operation (CVD), with tension applied to the resin base material by the roll-to-roll method. The conditions for the formation of the vapor deposition film were as follows.

### (Formation Conditions)

- Hexamethyldisiloxane:oxygen gas:helium = 1:10:10 (unit: slm)
- Power supplied to the cooling/electrode drum: 22 kW
- Line velocity: 100 m/min

By mixing 385 g of water, 67 g of isopropyl alcohol, and 9.1 g of 0.5 N hydrochloric acid, a solution having a pH of 2.2 was obtained. Into this solution, 175 g of tetraethoxysilane as a metal alkoxide and 9.2 g of glycidoxypropyltrimethoxysilane as a silane coupling agent were mixed with cooling to 10°C, yielding solution A. By mixing 14.7 g of polyvinyl alcohol having a degree of saponification of 99% or more and a degree of polymerization of 2400 as a water-soluble polymer, 324 g of water, and 17 g of isopropyl alcohol, solution B was obtained.

Solution A and solution B were mixed such that the ratio therebetween was 6.5:3.5 on a mass basis (solution A:solution B), yielding a barrier coating agent. The vapor deposition film formed on the resin base material was coated with the barrier coating agent by spin coating, and the coating was subjected to 60 seconds of heating treatment at 80°C in an oven, whereby a 300-nm thick barrier coating layer was formed.

In this manner, a transparent barrier base material was obtained.

### <Production of a Laminate>

As a first base material, a 20-µm thick biaxially oriented polypropylene film with one surface corona-treated (ME-1, manufactured by Mitsui Chemicals Tohcello, Inc.) was prepared. On the corona-treated surface of the first base material, a printed layer having a coating thickness of 1 µm (after drying) was formed by gravure roll coating. Then the printed layer was coated with a two-component polyurethane adhesive (RU-004/H-1, manufactured by Rock Paint Co., Ltd.) by gravure roll coating with a coating thickness of 4 µm (after drying), and the transparent barrier base material was dry-laminated to the workpiece such that the surface of the barrier coating layer of the base material was in contact with the surface of the bonding layer.

As a second base material (intermediate base material), the transparent barrier base material was subjected to corona treatment on its surface farther away from the barrier coating layer. The treated surface was coated with a two-component polyurethane adhesive (RU-004/H-1, manufactured by Rock Paint Co., Ltd.) by gravure roll coating with a coating thickness of 3.5 µm (after drying), and sealant film (Example 1) positioned such that its third layer faced the surface of the bonding layer was dry-laminated to the workpiece.

In such a manner, an approximately 109-µm thick laminate was obtained. The structure of the laminate is: biaxially oriented polypropylene film (20 µm)/printed layer (1 µm)/solvent-based bonding layer (4 µm)/transparent barrier base material (approximately 20 µm)/solvent-based bonding layer (3.5 µm)/sealant film (Example 1) (60 µm). The percentage monomaterialization of the laminate was approximately 91% by mass.

### [EXAMPLES 2 to 16]

Approximately 109-µm thick laminates were obtained in the same manner as in Example 1, except that sealant films (Examples 2 to 16), which were produced according to the formulae specified in Table 1 and Table 2 below, were used instead of sealant film (Example 1). The structure of the laminate is: biaxially oriented polypropylene film (20 µm)/printed layer (1 µm)/solvent-based bonding layer (4 µm)/transparent barrier base material (approximately 20 µm)/solvent-based bonding layer (3.5 µm)/sealant films (Examples 2 to 16) (60 µm). The percentage monomaterialization of the laminates was approximately 91% by mass.

### [EXAMPLE 17]

### <Production of a Sealant Film for Laminates>

Resin composition 1, which was for the first layer and contained random PP 1: 85% by mass, PE 1: 8% by mass, and elastomer 1: 7% by mass, and resin composition 2, which was for the second layer and contained block PP 1: 70% by mass, PE 1: 20% by mass, and elastomer 1: 10% by mass, were simultaneously extruded through a multilayer die, whereby an unstretched multilayer film in which the thicknesses of the first layer/the second layer/the third layer were 10 µm/50 µm/0 µm (hereinafter also referred to as "sealant film (Example 17)") was produced.

### <Production of a Laminate>

An approximately 109-µm thick laminate was obtained in the same manner as in Example 1, except that the produced sealant film (Example 17) was used instead of sealant film (Example 1). The structure of the laminate is: biaxially oriented polypropylene film (20 µm)/printed layer (1 µm)/solvent-based bonding layer (4 µm)/transparent barrier base material (approximately 20 µm)/solvent-based bonding layer (3.5 µm)/sealant film (Examples 2 to 16) (60 µm). The percentage monomaterialization of the laminate was approximately 91% by mass.

### [COMPARATIVE EXAMPLES 1 to 71

Approximately 109-µm thick laminates were obtained in the same manner as in Example 1, except that sealant films (Comparative Examples 1 to 7), which were produced according to the formulae specified in Table 3 below, were used instead of sealant film (Example 1). The structure of the laminate is: biaxially oriented polypropylene film (20 µm)/printed layer (1 µm)/solvent-based bonding layer (4 µm)/transparent barrier base material (approximately 20 µm)/solvent-based bonding layer (3.5 µm)/sealant films (Comparative Examples 1 to 7) (60 µm). The percentage monomaterialization of the laminates was approximately 91% by mass.

### [Evaluation of Heat Resistance]

A laminate obtained as described above was folded into a V-shape such that the surface closer to the sealant film (the first layer) was positioned inside, and heat-sealed to a width of 130 mm and a height of 165 mm, whereby a bag-shaped pouch was produced. The resulting pouch was filled with 100 mL of water through its opening, and the opening was hermetically sealed by heat sealing. By subjecting the sealed pouch to hot-water retort sterilization treatment at a retort temperature of 135°C for a retort duration of 30 minutes and checking for changes in appearance and temporary internal adhesion, the heat resistance of the laminate was evaluated. The results are presented in Table 1 to Table 3.

### <Evaluation Criteria>

A: No change in appearance
B: Creases have occurred in appearance, but there is no temporary internal adhesion
C: Creases have occurred in appearance, and minor temporary adhesion is observed near the sealed edges
D: Creases and temporary internal adhesion have occurred, and the laminate no longer maintains its bag shape

### [Evaluation of Low-Temperature Sealability]

A laminate obtained as described above was folded into a V-shape such that the surface closer to the sealant film (the first layer) was positioned inside, and heat-sealed over a width of 10 mm at 175°C. Then, by checking for leakage and seal retreat using a pressure tester (RTA-1T, manufactured by A&D Co., Ltd.), the low-temperature sealability of the laminate was evaluated. The results are presented in Table 1 to Table 3.

### <Evaluation Criteria>

A: No leakage and no seal retreat after a pressure test with 1 minute of pressurization at 100 kgf
B: No leakage and a seal retreat of less than 5 mm after a pressure test with 1 minute of pressurization at 100 kgf
C: No leakage and no seal retreat after a pressure test with 1 minute of pressurization at 75 kgf
B: Leakage observed after a pressure test with 1 minute of pressurization at 75 kgf

### [Evaluation of Impact Resistance]

Laminates obtained as described above were folded into a V-shape such that the surface closer to the sealant film (the first layer) was positioned inside, and heat-sealed to a width of 130 mm and a height of 165 mm, whereby ten bag-shaped pouches were produced. The resulting pouches were filled with 150 mL of water through their opening, and the opening was hermetically sealed by heat sealing. The sealed pouches were dropped from a height of 80 cm to the floor in the horizontal position (such that the trunk of the pouches hit the floor) ten times, and then dropped from a height of 80 cm to the floor in the vertical position (such that the bottom of the pouches hit the floor) ten times. By checking the number of broken pouches out of the ten, impact resistance was evaluated. The results are presented in Table 1 to Table 3.

### <Evaluation Criteria>

S: No broken pouch
A: There is no broken pouch, but retreat of seal positions is observed
B: There is no leakage of the contents, but retreat of seal positions and lifting near the sealed edges are observed
C: Two or fewer broken pouches
D: Three or more broken pouches

### [Evaluation of Workability]

The produced sealant film for laminates was placed on a flat surface. By visually examining the extent of curling of the sealant film, workability was evaluated. The results are presented in Table 1 to Table 3.

### <Evaluation Criteria>

S: A curl of less than 1 mm
A: A curl of 1 mm or more and less than 3 mm
B: A curl of 3 mm or more and less than 5 mm
C: A curl of 5 mm or more and less than 10 mm
D: A curl of 10 mm or more

### [Evaluation of Seal Strength]

By measuring the seal strength after the retort sterilization treatment used for the evaluation of heat resistance described above using a tensile tester (Strograph VG1F, manufactured by Toyo Seiki Seisaku-sho, Ltd.), the seal strength of the laminate was evaluated. The results are presented in Table 1 to Table 3.

### <Evaluation Criteria>

A: 50 N or more
B: 40 N or more
C: 30 N or more
D: 29 N or less (delamination in the sealant film for laminates occurred)

**[Table 1]**

| | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Third layer | Third matrix resin component | | Homo-PP 1 | 0 | 0 | 0 | 0 | 0 | 0 | 0 | 0 | 0 | 0 |
| | | | Block PP 1 | 55 | 70 | 70 | 70 | 75 | 70 | 82 | 85 | 70 | 70 |
| | | | Random PP 1 | 0 | 0 | 0 | 0 | 0 | 0 | 0 | 0 | 0 | 0 |
| | Third dispersed components | Polyethylene | PE 1 | 27 | 20 | 20 | 20 | 15 | 20 | 13 | 13 | 30 | 20 |
| | | | PE 2 | | | | | | | | | | |
| | | | PE 3 | | | | | | | | | | |
| | | Third elastomer | Elastomer 1 | 18 | 10 | 10 | 10 | 10 | 10 | 5 | 2 | 0 | 10 |
| | | | Elastomer 2 | | | | | | | | | | |
| Second layer | Second matrix resin component | | Homo-PP 1 | 0 | 0 | 0 | 0 | 0 | 0 | 0 | 0 | 0 | 0 |
| | | | Block PP 1 | 55 | 70 | 70 | 70 | 75 | 70 | 82 | 85 | 70 | 70 |
| | | | Random PP 1 | 0 | 0 | 0 | 0 | 0 | 0 | 0 | 0 | 0 | 0 |
| | Second dispersed components | Polyethylene | PE 1 | 27 | 20 | 20 | 20 | 15 | 20 | 13 | 13 | 30 | 20 |
| | | | PE 2 | | | | | | | | | | |
| | | | PE 3 | | | | | | | | | | |
| | | Second elastomer | Elastomer 1 | 18 | 10 | 10 | 10 | 10 | 10 | 5 | 2 | 0 | 10 |
| | | | Elastomer 2 | | | | | | | | | | |
| First layer | First matrix resin component | | Homo-PP 1 | 0 | 0 | 0 | 0 | 0 | 0 | 0 | 0 | 0 | 0 |
| | | | Block PP 1 | 0 | 0 | 0 | 0 | 0 | 0 | 0 | 0 | 0 | 0 |
| | | | Random PP 1 | 75 | 70 | 75 | 85 | 85 | 90 | 80 | 90 | 85 | 85 |
| | First dispersed components | Polyethylene | PE 1 | 13 | 20 | 13 | 8 | 8 | 6 | 11 | 6 | 15 | 8 |
| | | | PE 2 | | | | | | | | | | |
| | | | PE 3 | | | | | | | | | | |
| | | First elastomer | Elastomer 1 | 12 | 10 | 12 | 7 | 7 | 4 | 9 | 4 | 0 | 7 |
| | | | Elastomer 2 | | | | | | | | | | |
| Layer thicknesses (µm): | | | | 10/40/10 | 10/40/10 | 10/40/10 | 10/40/10 | 10/40/10 | 10/40/10 | 10/40/10 | 10/40/10 | 10/40/10 | 12/36/12 |
| First layer/second layer/third layer | | | | | | | | | | | | | |
| PE + elastomer/all layers (%) | | | | 41.7 | 30.0 | 29.2 | 27.5 | 23.3 | 26.7 | 18.3 | 14.2 | 27.5 | 27.5 |
| Heat resistance | | | | B | B | B | A | A | A | A | A | A | A |
| Low-temperature sealability | | | | B | C | B | A | A | A | A | A | A | A |
| Impact resistance | | | | S | S | S | S | S | A | B | C | A | S |
| Workability | | | | B | B | B | A | A | A | A | A | A | A |
| Seal strength | | | | B | C | C | A | A | A | A | A | A | A |

**[Table 2]**

| | | | | Example 11 | Example 12 | Example 13 | Example 14 | Example 15 | Example 16 | Example 17 |
|---|---|---|---|---|---|---|---|---|---|---|
| Third layer | Third matrix resin component | | Homo-PP 1 | 0 | 0 | 0 | 0 | 0 | 0 | 0 |
| | | | Block PP 1 | 70 | 70 | 70 | 0 | 70 | 70 | 0 |
| | | | Random PP 1 | 0 | 0 | 0 | 85 | 0 | 0 | 0 |
| | Third dispersed components | Polyethylene | PE 1 | 20 | | | 8 | 20 | 20 | 0 |
| | | | PE 2 | | 20 | | | | | |
| | | | PE 3 | | | 20 | | | | |
| | | Third elastomer | Elastomer 1 | 10 | 10 | 10 | 7 | | | 0 |
| | | | Elastomer 2 | | | | | 10 | 10 | |
| Second layer | Second matrix resin component | | Homo-PP 1 | 0 | 0 | 0 | 0 | 0 | 0 | 0 |
| | | | Block PP 1 | 70 | 70 | 70 | 70 | 70 | 70 | 70 |
| | | | Random PP 1 | 0 | 0 | 0 | 0 | 0 | 0 | 0 |
| | Second dispersed components | Polyethylene | PE 1 | 20 | | | 20 | 20 | 20 | 20 |
| | | | PE 2 | | 20 | | | | | |
| | | | PE 3 | | | 20 | | | | |
| | | Second elastomer | Elastomer 1 | 10 | 10 | 10 | 10 | | | 10 |
| | | | Elastomer 2 | | | | | 10 | 10 | |
| First layer | First matrix resin component | | Homo-PP 1 | 0 | 0 | 0 | 0 | 0 | 0 | 0 |
| | | | Block PP 1 | 0 | 0 | 0 | 0 | 0 | 0 | 0 |
| | | | Random PP 1 | 85 | 85 | 85 | 85 | 85 | 85 | 85 |
| | First dispersed components | Polyethylene | PE 1 | 8 | | | 8 | 8 | 8 | 8 |
| | | | PE 2 | | 8 | | | | | |
| | | | PE 3 | | | 8 | | | | |
| | | First elastomer | Elastomer 1 | 7 | 7 | 7 | 7 | | 7 | 7 |
| | | | Elastomer 2 | | | | | 7 | | |
| Layer thicknesses (µm): | | | | 15/30/15 | 10/40/10 | 10/40/10 | 10/40/10 | 10/40/10 | 10/40/10 | 10/50/0 |
| First layer/second layer/third layer | | | | | | | | | | |
| PE + elastomer/all layers (%) | | | | 26.3 | 27.5 | 27.5 | 25.0 | 27.5 | 27.5 | 27.5 |
| Heat resistance | | | | A | A | A | A | A | A | A |
| Low-temperature sealability | | | | B | A | A | A | A | A | A |
| Impact resistance | | | | A | B | C | A | S | S | S |
| Workability | | | | B | B | A | S | A | B | A |
| Seal strength | | | | B | C | C | A | B | A | A |

**[Table 3]**

| | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Third layer | Third matrix resin component | | Homo-PP 1 | 0 | 0 | 0 | 0 | 70 | 0 | 0 |
| | | | Block PP 1 | 85 | 100 | 0 | 0 | 0 | 0 | 70 |
| | | | Random PP 1 | 0 | 0 | 100 | 100 | 30 | 100 | 0 |
| | Third dispersed components | Polyethylene | PE 1 | 13 | 0 | 0 | 0 | 0 | 0 | 20 |
| | | | PE 2 | | | | | | | |
| | | | PE 3 | | | | | | | |
| | | Third elastomer | Elastomer 1 | 2 | 0 | 0 | 0 | 0 | 0 | 10 |
| | | | Elastomer 2 | | | | | | | |
| Second layer | Second matrix resin component | | Homo-PP 1 | 0 | 0 | 0 | 0 | 0 | 0 | 0 |
| | | | Block PP 1 | 85 | 100 | 100 | 100 | 83 | 0 | 70 |
| | | | Random PP 1 | 0 | 0 | 0 | 0 | 0 | 100 | 0 |
| | Second dispersed components | Polyethylene | PE 1 | 13 | 0 | 0 | 0 | 0 | 0 | 20 |
| | | | PE 2 | | | | | | | |
| | | | PE 3 | | | | | | | |
| | | Second elastomer | Elastomer 1 | 2 | 0 | 0 | 0 | 17 | 0 | 10 |
| | | | Elastomer 2 | | | | | | | |
| First layer | First matrix resin component | | Homo-PP 1 | 0 | 0 | 0 | 0 | 70 | 0 | 0 |
| | | | Block PP 1 | 0 | 100 | 100 | 0 | 0 | 0 | 20 |
| | | | Random PP 1 | 98 | 0 | 0 | 100 | 30 | 100 | 31 |
| | First dispersed components | Polyethylene | PE 1 | 1 | 0 | 0 | 0 | 0 | 0 | 30 |
| | | | PE 2 | | | | | | | |
| | | | PE 3 | | | | | | | |
| | | First elastomer | Elastomer 1 | 1 | 0 | 0 | 0 | 0 | 0 | 19 |
| | | | Elastomer 2 | | | | | | | |
| Layer thicknesses (µm): | | | | 10/40/10 | 10/40/10 | 10/40/10 | 10/40/10 | 10/40/10 | 10/40/10 | 10/40/10 |
| First layer/second layer/third layer | | | | | | | | | | |
| PE + elastomer/all layers (%) | | | | 12.8 | 0.0 | 0.0 | 0.0 | 11.3 | 0.0 | 33.2 |
| Heat resistance | | | | A | A | A | A | A | C | D |
| Low-temperature sealability | | | | A | D | D | A | B | A | D |
| Impact resistance | | | | D | D | D | D | D | D | A |
| Workability | | | | A | S | A | S | C | S | C |
| Seal strength | | | | A | A | A | A | D | A | D |

### Reference Signs List

1: laminate
10: polypropylene resin base material
20: barrier base material
22: polypropylene resin layer
23: surface coating layer
24: vapor deposition film
25: barrier coating layer
26: surface resin layer
27: adhesive resin layer
30: sealant layer (sealant film for laminates)
40, 40A, 40B: bonding layer,
50: packaging bag
51: easy-open portion
52: notch portion
53: half-cut line,
60: stand-up pouch
61: trunk (side sheet)
62: bottom (bottom sheet)
63: steam vent mechanism
63a: steam vent seal portion
63b: unsealed portion

## Claims

1. A sealant film for a laminate, the sealant film being for use in a laminate in which a percentage of polypropylene relative to a total amount of resin materials is 80% by mass or more, and
the sealant film comprising at least a first layer that, when the sealant film is used in the laminate, is positioned at one of two surfaces of the laminate and a second layer in contact with the first layer, wherein:
the first layer contains a first matrix resin component constituting 51% by mass or more and 90% by mass or less relative to a total amount of the first layer and at least one first dispersed component, and has a sea-island structure in which the first dispersed component is dispersed in the first matrix resin component;
the second layer contains a second matrix resin component constituting 51% by mass or more and 85% by mass or less relative to a total amount of the second layer and at least one second dispersed component, and has a sea-island structure in which the second dispersed component is dispersed in the second matrix resin component;
the first matrix resin component is a propylene-ethylene random copolymer;
the first dispersed component includes at least one type of polyethylene constituting at least 5% by mass or more relative to the total amount of the first layer;
the second matrix resin component is block polypropylene; and
the second dispersed component includes at least one type of polyethylene constituting at least 5% by mass or more relative to the total amount of the second layer.

2. The sealant film for a laminate according to claim 1, wherein the block polypropylene contains at least a propylene homopolymer and a block elastomer and has a sea-island structure in which the block elastomer is dispersed in the propylene homopolymer.

3. The sealant film for a laminate according to claim 2, wherein the block elastomer is an ethylene-propylene elastomer.

4. The sealant film for a laminate according to claim 1, wherein a percentage of the second dispersed component to the total amount of the second layer is 15% by mass or more and 49% by mass or less.

5. The sealant film for a laminate according to claim 4, wherein a percentage of the first dispersed component to the total amount of the first layer is 10% by mass or more and 49% by mass or less.

6. The sealant film for a laminate according to claim 5, wherein the percentage of the first dispersed component to the total amount of the first layer is smaller than the percentage of the second dispersed component to the total amount of the second layer.

7. The sealant film for a laminate according to claim 1, wherein the second dispersed component further includes a second elastomer.

8. The sealant film for a laminate according to claim 7, wherein the second elastomer is a propylene-ethylene elastomer or an ethylene-α olefin elastomer.

9. The sealant film for a laminate according to claim 7, wherein, in the second dispersed component, a ratio of an amount of the second elastomer to an amount of the polyethylene is 0.5 or more and less than 1.0.

10. The sealant film for a laminate according to claim 1, wherein the first dispersed component further includes a first elastomer.

11. The sealant film for a laminate according to claim 10, wherein, in the first dispersed component, a ratio of an amount of the first elastomer to an amount of the polyethylene is 0.5 or more and less than 1.0.

12. The sealant film for a laminate according to claim 1, wherein a ratio of a thickness of the second layer to a thickness of the first layer is 3.0 or more.

13. The sealant film for a laminate according to claim 12, wherein the second layer has a thickness of 50 µm or more.

14. The sealant film for a laminate according to claim 1, wherein the polyethylene in the second dispersed component includes linear low-density polyethylene (LLDPE) or low-density polyethylene (LDPE).

15. The sealant film for a laminate according to claim 1, wherein the polyethylene in the second dispersed component is linear low-density polyethylene (LLDPE).

16. The sealant film for a laminate according to claim 2, the sealant film further comprising a third layer in contact with the second layer, wherein:
the third layer contains a third matrix resin component constituting 51% by mass or more and 85% by mass or less relative to a total amount of the third layer and at least one third dispersed component, and has a sea-island structure in which the third dispersed component is dispersed in the third matrix resin component; and
the third matrix resin component is the block polypropylene.

17. The sealant film for a laminate according to claim 16, wherein the third dispersed component includes any one or both of polyethylene and a third elastomer.

18. The sealant film for a laminate according to claim 1, wherein a thickness of the sealant film is 30 µm or more and 200 µm or less.

19. A laminate for use in a packaging material,
the laminate comprising at least a first base material and a sealant layer, wherein:
the sealant layer is formed of the sealant film for a laminate according to any one of claims 1 to 18; and
a percentage of polypropylene relative to a total amount of resin materials is 80% by mass or more.

20. The laminate according to claim 19, further comprising a second base material between the first base material and the sealant layer.

21. A packaging container comprising the laminate according to claim 19 or 20.

22. The packaging container according to claim 21, wherein the packaging container is a boiling or retort pouch.
